# EUROPÄISCHE PATENTSCHRIFT

(11) **EP 2 323 006 B1**
(45) Veröffentlichungstag und Bekanntmachung des Hinweises auf die Patenterteilung: **09.01.2013**
(21) Anmeldenummer: 09175935.7
(22) Anmeldetag: 13.11.2009
(51) Int. Cl.: G05D 1/02

(54) **Lagersysteme mit Traktoren und Anhängern**
Storage systems with tractors and trailers
Systèmes de stockage dotés de tracteurs et de remorques

(43) Veröffentlichungstag der Anmeldung: 18.05.2011
(73) Patentinhaber: Telejet Kommunikations GmbH, 61462 Königstein (DE)
(72) Erfinder: Jeschke, Klaus, 65779 Kelkheim (DE)
(74) Vertreter: Alber, Norbert

(56) Entgegenhaltungen:
- WO-A1-90/02987
- US-A- 5 170 352
- US-A- 5 202 832
- US-A1- 2003 233 177

## Beschreibung

### I. Anwendungsgebiet

Die Erfindung betrifft ein Lagerungssystem, in dem die Produkte chaotisch eingelagert werden und deren Lagerpositionen nur dem Zentralrechner bekannt ist.

### II. Technischer Hintergrund

Solche Lagerungssysteme sind in vielen Varianten bekannt.

Aus der WO 90/02987 ist ein Lagerungssystem bekannt.

Eine sehr häufige Variante ist ein so genanntes Hochregallager, bei dem beidseits eines Ganges, in dem ein Regalbediengerät (RBG) horizontal und vertikal verfährt, Lagerungsgestelle aufgebaut sind, in der die Produkte auf einheitlichen Trays oder Paletten abgestellt und eingelagert werden und vom RBG sowohl ein- als auch ausgelagert werden können.

Zum einen sind dabei die Abmessungen des einzelnen Lagerplatzes fest vorgegeben, zum anderen ist das Lagergestell häufig nur eine Lagerposition tief, da eine größere Tiefe nur dann sinnvoll ist, wenn z. B. gleichartige Produkte in der selben Reihe hintereinander eingelagert sind, da das RBG nur das vorderste gelagerte Tray oder Palette einer Reihe ergreifen kann.

Wegen der Zentralsteuerung ist das teuerste mechanische Einzelteil eines solchen z. B. Hochregallagers das RBG. Deshalb und aus Kollisionsgründen ist in einem Hochregallager pro Gang nur ein RBG vorhanden, was die Einund Auslagerungszeit für die Produkte nicht unter ein systembedingtes Minimum absinken lässt.

Daneben sind Flächenlager - z. B. in Apotheken - bekannt, die ebenfalls als Hochregallager ausgebildet sein können, bei denen die Produkte insbesondere direkt, also nicht auf Trays oder Paletten liegend, auf einer körperlich möglichst wenig unterteilten Lagerfläche abgelegt werden, wiederum beispielsweise in Etagen übereinander rechts und links eines Ganges für ein Regalbediengerät, und vom RBG, das beispielsweise über einen Greiferarm verfügt, direkt ergriffen und auf der Lagerfläche ein- oder ausgelagert werden können.

Auch hier ist das die Ein- und Auslagerungszeit bestimmende Größe das RBG, welches wiederum - außer der Zentralsteuerung - das teuerste mechanische Bauteil ist, weshalb hiervon in einem Gang des Lagers wiederum nur ein oder zwei RBG vorhanden sind.

### III. Darstellung der Erfindung

### a) Technische Aufgabe

Es ist daher die Aufgabe gemäß der Erfindung, ein Verfahren sowie eine Vorrichtung zum Lagern von Produkten zu schaffen, bei dem trotz verhältnismäßig geringer Kosten die Umschlagleistung dem Bedarf sehr leicht angepasst werden kann, und ebenso die Lagergröße, bei hoher Ausfallsicherheit aufgrund Redundanz aller Elemente.

### b) Lösung der Aufgabe

Diese Aufgabe wird durch die Merkmale der Ansprüche 1 und xx gelöst. Vorteilhafte Ausführungsformen ergeben sich aus den Unteransprüchen.

Das Grundprinzip des erfindungsgemäßen Lagerungsverfahrens besteht darin, dass die Produkte auf Anhängern stehen oder liegen, und diese - mit einem oder mehreren gleichen oder verschiedenen Produkten - beladenen Anhänger auf einer Lagerfläche an körperlich nicht unterteilten Lagerpositionen abgestellt werden, die von einer Zentralsteuerung für jeden einzelnen Lagerungsfall einzeln ermittelt und vorbestimmt wird. Insofern handelt es sich um ein so genanntes chaotisches Lagerungssystem, da die konkrete Lagerposition eines konkreten Produktes nur der Zentralsteuerung bekannt ist.

Die Anhänger, die selbst keinen Antrieb besitzen, werden mit Hilfe von Traktoren, die einen eigenen Antrieb besitzen, auf der Lagerfläche zu und von der Lagerposition bewegt, beispielsweise von einer Beladestation, an der der leere Anhänger mit einem oder mehreren Produkten beladen wird, zur Lagerposition oder umgekehrt von der Lagerposition zu einer Entladestation, wo das Produkt wieder vom Anhänger entnommen wird, und eventuell weiter zu einer Warteposition für leere Anhänger, die sich aber außerhalb der eigentlichen Lagerfläche befinden kann.

Da die Traktoren sowohl ziehen als auch schieben können, könnten sie im Rahmen dieser Anmeldung auch allgemeiner als "Regalbediengeräte" bezeichnet werden, und ebenso die Anhänger als "Trays" oder "Behälter", was jedoch die praktische Vorstellung erschweren würde.

Die Lagerfläche soll dabei körperlich möglichst wenig unterteilt sein, also im Idealfall eine horizontal ebene, möglichst große Fläche sein. Natürlich kann die Lagerfläche auf mehrere Etagen übereinander verteilt sein, was dann ein Verbringen des beladenen Anhängers, gegebenenfalls auch zusammen mit dem Traktor, von einer Etage in die andere erfordert, beispielsweise mit Hilfe eines Aufzuges. Ebenso können spezielle Bereiche, z. B. ein Kühlbereich abgetrennt und nur über eine Schleuse von den Traktoren angefahren werden.

Im Fall mehrerer Etagen ist der vertikale Abstand zwischen den einzelnen Etagen nur so groß, wie er für die größten, also höchsten, einzulagernden Produkte benötigt wird, also in aller Regel geringer, als es zum Hineingehen eines menschlichen Bedieners notwendig wäre.

Dementsprechend flach müssen natürlich auch die Traktoren und vor allem die Anhänger sein, und vor allem müssen die Traktoren auf der Lagerfläche völlig autark agieren können:
Dies bedeutet, dass sie - natürlich in Abhängigkeit von empfangenen Befehlen von der Zentralsteuerung, die sie drahtlos erhalten - einen leeren oder beladenen Anhänger anfahren, ankuppeln, auf einem von der Zentralsteuerung anhand der dort bekannten momentanen Lagerungslandschaft vorgegebenem Verfahrweg oder Verfahrbereich verfahren, in der Lagerposition selbsttätig einparken und abkuppeln, und dann z. B. zu einer Parkposition für Traktoren fahren und gegebenenfalls dort ihren Energiespeicher nachladen.

Der Vorteil dieses Lagerungssystems besteht darin, dass die Kosten der eingesetzten Traktoren wesentlich geringer als die eines üblichen, auch in der Höhe verfahrbaren, Regalbediengerätes sind, und deshalb die Ein- und Auslagerungszeiten durch Einsatz einer relativ großen Anzahl von Traktoren **―** in Abhängigkeit von der Größe der Lagerfläche - stark reduziert werden können. Auch die Erstellung der Lagerfläche selbst ist sehr kostengünstig, da sie keine spezifischen Installationen wie passgenaue Schienen, Schienenanschlüsse, Weichen, Stromzuführungen etc. benötigen, sondern lediglich eine stabile, möglichst ebene Lagerfläche sein muss.

Diese Vorteile überwiegen die systemimmanenten Nachteile dieses Systems bei weitem, nämlich dass eine sehr große Anzahl von Anhängern benötigt wird, auf denen die Produkte beim Einlagern verbleiben. Die Anhänger jedoch können äußerst kostengünstig hergestellt werden, da sie über keinen Antrieb verfügen und auf das Minimum reduziert werden können, im Idealfall eine Bodenplatte **―** gegebenenfalls mit Antirutschmatte und/oder Mulden oder Fächern zum Auflegen/Einlegen der Produkte - an deren Unterseite sich zum Beispiel zwei oder mehr Gleitflächen befinden, mit deren Hilfe der Anhänger gleitend über die Ladefläche geschoben oder gezogen wird. Es können auch mehrere Arten von Anhängern im gleichen Lager benutzt werden, beispielsweise Anhänger unterschiedlicher Größe, mit oder ohne Unterteilung in einzelne Ablagemulden oder in unterschiedlich große Ablagemulden.

Selbst drehende Räder an den Anhängern sind nicht unbedingt notwendig.

Der Anhänger kann jedoch auch seitlich aufragende Seitenwände besitzen, um ein zu leichtes Überhängen oder Herabfallen von Produkten zu vermeiden.

Die notwendige Kupplung zwischen Anhänger und Traktor, die ja ebenfalls automatisch funktionieren muss, wird dabei so gestaltet, dass sich am Traktor das teure Kupplungselement befindet, und das Kupplungselement am Anhänger möglichst geringwertig ist, im Idealfall beispielsweise nur aus definiert angeordneten und dimensionierten Löchern in der Seitenwand besteht, in die entsprechende Kupplungselemente des Traktors eingreifen können.

Die Kupplungselemente sollten vorzugsweise nicht nur an einer sondern an mindestens zwei einander gegenüberliegenden Stirnseiten des Anhängers vorhanden sein, um die Anzahl an Rangiervorgängen möglichst gering zu halten.

Das Ankuppeln eines Traktors an einen Anhänger bewirkt vorzugsweise auch ein geringfügiges Anheben des Anhängers auf der Seite der ergriffenen Kupplung, um auf dieser Seite den Anhänger vom Untergrund, also der Lagerfläche, abzuheben, was das Verhalten eines Gespannes aus Traktor und Anhänger beim Ziehen oder Schieben berechenbarer macht.

In einer anderen Ausführungsform besitzen die Anhänger an ihrer Unterseite mindestens drei, besser vier Gleitflächen, die permanent, also auch im angekoppelten Zustand, im Kontakt mit der Lagerfläche stehen, also beim Ankuppeln nicht angehoben werden. Dadurch wird zwar die Anzahl der in Kontakt befindlichen Gleitflächen bei der Bewegung mittels eines Traktors nicht verringert, jedoch kann die Kupplung einfacher gestaltet werden, da sie kein Anheben des Anhängers bewirken muss.

Auch wird dadurch keine bestimmte Seite des Anhängers für das Ankuppeln bevorzugt, so dass von allen Seiten angekuppelt werden kann, was das Rangieren reduziert.

Im Idealfall besitzen die Anhänger in diesem Fall eine quadratische Grundform, sofern dies aufgrund der Gestaltung und Größe der einzulagernden Produkte nicht prinzipiell nachteilig ist, und Kupplungen auf allen Seiten.

Die Traktoren besitzen zur Erledigung ihrer Aufgaben neben einem Sender und Empfänger zum drahtlosen Empfangen der Signale von und zur Zentralsteuerung, was insbesondere mittels WLAN geschieht, einen Notkanal zur Übermittlung von Signalen, der mittels Funk oder Ultraschall funktionieren kann für den Fall, dass der normale Signalübermittlungskanal ausfällt oder an einzelnen Stellen der Lagerfläche nicht funktioniert, und eine eigene Traktorsteuerung, die die Realisierung der Fahrtaufträge durchführt und in der Regel auf mehrere Prozessoren verteilt ist. Daneben mindestens eine, beispielsweise hinsichtlich der Blickrichtung schwenkbare Kamera und/oder getrennte Kamera für Vorwärts-, Rückwärts- und/oder Seitwärtsrichtungen. Diese Kameras müssen zum einen in der Lage sein, die Barcodes, die an Anhängern angeordnet sind, zu identifizieren und auszuwerten, und sollten darüber hinaus eine Bildbearbeitungs-Einheit mit umfassen, die in der Traktorsteuerung mit umfasst ist, um zumindest beim Ankuppeln, besser auch in anderen Fällen, automatisch einen seitlichen Versatz und/oder den Abstand zum anzukuppelnden Anhänger erkennen zu können. Darüber hinaus können die Kameras natürlich für das manuelle Fahren eines Traktors dem außerhalb des Lagers stehenden Bediener als Orientierungshilfe dienen.

Alternativ und/oder zusätzlich können die Traktoren mindestens einen Laser tragen, der eine Lichtlinie auf den Boden und/oder einen anzukoppelnden Anhänger projiziert, und mit Hilfe eines Berechnungsverfahrens, wie etwa des Lichtschnitt-Triangulationsverfahrens, erkennt, wo die Ecke des Anhängers steht und ob ein Seiten- und Winkelversatz zum ankuppelnden Traktor vorliegt.

Darüber hinaus besitzt jeder Traktor auf der Rückseite und/oder der Vorderseite und den Seiten einfache Abstandssensoren, um nach vorne beim Vorwärtsfahren drohende Kollisionen rechtzeitig zu bemerken und ebenso beim Rückwärtsfahren ohne Anhänger, und darüber hinaus beim Rückwärtsfahren zum Zweck des Ankuppelns den Abstand und einen Winkelversatz zum Anhänger festzustellen, was dadurch möglich ist, dass auf der Heckseite zwei in Querrichtung beabstandete Abstandssensoren vorhanden sind.

Sollte der Traktor an der automatischen Umsetzung eines von der Zentralsteuerung erhaltenen Fahrbefehls scheitern - egal, ob der anzukuppelnde Anhänger wider Erwarten seine Position verändert hat, ein Fahren in der vorgesehenen Richtung wegen einer durchhängenden Bodenplatte nicht möglich ist oder Ähnliches - so kann als Notmaßnahme immer auf zunächst manuellen Betrieb des Traktors und als weitere Maßnahme auf den Einsatz eines Rettungstraktors, der wiederum automatisch oder manuell gefahren werden kann, zurückgegriffen werden.

Die Kommunikationsmöglichkeiten des Traktors umfassen auch die Möglichkeit, dass zwei Traktoren direkt miteinander kommunizieren, also nicht nur über die Zentralsteuerung, beispielsweise, um gemeinsam eine Aufgabe zu lösen wie etwa dass ein erster Traktor einen im Weg stehenden Anhänger ankuppelt und beiseite fährt, damit ein zweiter Traktor einen dahinter stehenden Anhänger abholen kann.

Bevorzugt werden die Traktoren alle gleich gestaltet sein, jedoch können abhängig von der Struktur des Lagers auch unterschiedliche Traktoren, beispielsweise unterschiedlich große und unterschiedlich leistungsstarke, Traktoren eingesetzt werden.

Der Zentralrechner gibt für jede einzelne Fahrt jedes einzelnen Traktoren nicht nur Start- und Zielposition des Verfahrweges vor, sondern auch zumindest den zur Verfügung stehenden Verfahrbereich, besser den Verfahrweg, den er in Kenntnis der momentan vorhandenen Lagerungslandschaft - also an welchen Stellen die Lagerfläche von beladenen oder unbeladenen Anhängern oder wartenden Traktoren besetzt ist - festlegt. Zusätzlich werden natürlich auch die Zeitpunkte, also der Startzeitpunkt, gegebenenfalls die Verfahrgeschwindigkeit und damit auch der zeitliche Verlauf des Verfahrweges von der Zentralsteuerung exakt vorgegeben, denn nur dadurch können bei vielen gleichzeitig im Einsatz befindlichen Traktoren Kollisionen vermieden werden.

Konkret könnte dies so aussehen, dass der Zentralrechner für einen Fahrauftrag an die Traktorsteuerung nicht nur Start und Ziel vorgibt, sondern zum einen die zum Befahren freigegebenen Flächen, also einschließlich der Lagerungslandschaft um diese freigegebenen Flächen herum, insbesondere die gesamte Lagerungslandschaft, sowie die Zeitzonen, in denen der Traktor oder das Gespann die einzelnen Teile der freigegebenen Bereiche, also die jeweiligen freigegebenen Teilbereiche, benutzen darf.

Die Traktorsteuerung meldet an die Zentralsteuerung beispielsweise die aktuelle Position immer zurück, zumindest jedoch das Überfahren bestimmter bevorzugter Punkte, wie etwa Kreuzungen, oder die Grenzen zwischen den einzelnen freigegebenen Teilbereichen.

Im Rahmen der freigegebenen Flächen zum Befahren wählt der Traktorrechner jedoch bevorzugt die genaue Route selbst aus, beispielsweise abhängig von Effizienzgesichtspunkten wie kürzeste Fahrstrecke oder geringste Anzahl von langsam zu durchfahrenden Abbiegungen oder ähnlichem, und er legt auch selbst seine Geschwindigkeit fest.

Bei der Übergabe der Daten der Lagerungslandschaft kalkuliert die Zentralsteuerung um jedes Hindernis herum eine vergrößerte sogenannte Toleranzzone mit ein, die der Vergrößerung der Kollisionssicherheit dient, und deren Größe in Abhängigkeit vom Geschehen im Lager und abhängig von den noch tatsächlich stattgefundenen oder fast stattgefundenen Kollisionen auch vergrößert und verkleinert werden kann, nicht nur für das ganze Lager sondern auch für einzelne Lagerungsbereiche oder sogar einzelnen Hindernisse.

Das Durchfahren der einzelnen freigegebenen Teilbereiche kann von der Zentralsteuerung nicht nur von bestimmten zeitlichen Limits abhängig gemacht werden, sondern auch vom Auftreten anderer Ereignisse, wie beispielsweise das Queren eines anderen Traktors oder Gespannes, bevor der zu steuernde Traktor weiterfährt.

Damit die Traktoren einen vorgegebenen Fahrweg fahren können und Anhänger an vorbestimmten Positionen aufnehmen oder abstellen können, sind unterschiedliche Arten von Navigationssystemen für die Traktoren möglich.

Erfindungsgemäß bevorzugt wird jedoch ein optisches Orientierungssystem der Traktoren auf der Lagerfläche, in dem auf der Lagerfläche optische Markierungen angeordnet sind, an denen sich die Traktoren mit Hilfe entsprechender, an den Traktoren vorhandener, optischer Sensoren orientieren:
Eine bevorzugte Art von optischen Markierungen sind dabei Barcodes in Strichform oder in zweidimensionaler Form, die sich in vielfacher Anordnung auf der Oberseite der Lagerfläche befinden. In der bevorzugten Ausführung ist die gesamte Lagerfläche im Wesentlichen flächendeckend mit kleinen Barcodes bedruckt, an denen sich die Traktoren orientieren.

Denkbar ist jedoch auch die Kombination der optischen Markierungen wie etwa der Barcodes mit einem in einer oder zwei sich kreuzenden Raumrichtungen aufgebrachten regelmäßigen Linienraster. Die Barcodes können sich dann entweder innerhalb jedes Rasterfeldes an einer vorbestimmten Position, jeweils z. B. flächen füllend oder in derselben Ecke, befinden oder auch genau im freigelassenen Kreuzungsbereich der Rasterlinien oder ähnliches.

Die Führungslinien eines solchen ein- oder zweidimensionalen Rasters würden das Festlegen der Verfahrrichtung der Traktoren vereinfachen.

Um den Bedarf an Freiräumen auf der Lagerfläche für Verfahrwege und Rangiermanöver möglichst gering zu halten, ist es essentiell, dass die Traktoren möglichst wendig sind, also insbesondere einen möglichst geringen Wendekreis besitzen, vorzugsweise auf der Stelle drehen können, und selbstverständlich in alle Richtungen fahren können.

In einer bevorzugten Ausführungsform besitzen die Traktoren deshalb nur drei im Dreieck, vorzugsweise in einem gleichseitigen Dreieck, oder vier im Viereck angeordnete, unabhängig voneinander antreibbare Räder, deren geometrische Rotationsachsen sich z. B. in einem einzigen Punkt treffen und die sich beispielsweise an den Ecken eines in der Aufsicht ebenfalls dreieckigen Traktors befinden.

Durch spezifische Ansteuerung der einzelnen Räder kann jede gewünschte Verfahrrichtung sowie ein Drehen auf der Stelle realisiert werden, wenn die Räder in der Aufsicht betrachtet z. B. Tangenten an einem durch alle drei Räder gehenden Kreis sind.

Um einen zu starken Verschleiß an den Rädern, die in diesem Fall häufig schräg zu ihrer Abrollrichtung oder gar lotrecht hierzu bewegt werden, zu vermeiden, werden Räder mit in die Lauffläche integrierten Querschieberollen eingesetzt, die vorzugsweise eine ballige Kontur besitzen, wie dies prinzipiell aus den Rollbahnen von Fördersystemen bereits bekannt ist.

Abhängig von dem mechanischen Aufwand und den Kosten der Kupplung am Traktor kann der Traktor eine solche Kupplung nur an einer Stirnseite oder an jeder seiner Stirnseiten besitzen, wobei letzteres den baulichen Aufwand vergrößert, jedoch die Rangierzeiten reduziert.

Da es bei einem solchen Lagerungssystem nicht ausgeschlossen werden kann, dass durch Steuerungsfehler, Herabfallen eines Produktes von einem Anhänger, Umkippen eines Anhängers, entstehende Fugen oder Absätze in der Lagerfläche oder ähnliches, ein Traktor nicht in der Lage ist, die von der Zentralsteuerung vorgegebenen Befehle auch umzusetzen, oder aufgrund eines technischen Defektes im Traktoren die erhaltenen Befehle falsch umsetzt oder überhaupt nicht mehr umsetzt, sondern schlicht und einfach liegen bleibt, sind praktikable Rettungsmaßnahmen ein wesentlicher Bestandteil des erfindungsgemäßen Verfahrens. Dies auch eingedenk der Tatsache, dass in aller Regel die Lagerfläche in mehreren Etagen übereinander angeordnet sein wird und der Abstand dazwischen zu gering ist, als dass ein menschlicher Bediener auch nur hineinkriechen könnte, um in einer Etage aufgetretene Havarien, Verschmutzungen oder anderes manuell zu beheben.

Ein möglicher auftretender Fehler ist beispielsweise die Verschmutzung der Lagerfläche durch ein verschüttetes pulverförmiges oder flüssiges Lagerungsprodukt oder ähnliches, was das Lesen der Markierungen auf der Lagerfläche durch den optischen Sensor des Traktors verhindern würde:
Zu diesem Zweck gibt es entweder spezielle Reinigungstraktoren und/oder Reinigungsanhänger, die mit speziellen Reinigungsvorrichtungen ausgestattet sind, um - angepasst an die Arten von vorhandenen Lagerungsprodukten - feste oder flüssige Verschmutzungen von der Lagerfläche zu entfernen.

Eine andere zu erwartende Störung ist ein Traktor, der liegen geblieben ist oder empfangene Signale völlig falsch umsetzt.

Obwohl die Traktoren von der Zentralsteuerung gelenkt werden, muss jeder Traktor vorzugsweise einen oder besser mehrere eigene On-Board-Prozessoren enthalten, der nicht nur in der Lage ist, die von der Zentralsteuerung empfangenen Signale umzusetzen, sondern aufgrund der von der eigenen Sensorik erhaltenen Informationen im Notfall individuell selbst zu reagieren, also selbst einen Detail-Verfahrweg innerhalb des von der Zentralsteuerung vorgegebenen Grob-Verfahrweges oder eine Alternativroute z. B. innerhalb der vom Zentralrechner freigegebenen Bereiche zu berechnen, beispielsweise aufgrund von zusätzlich am Traktor vorhandenen Sensoren, die die Umgebung abtasten, z. B. Kameras oder Ultraschallsensoren. Dieser wenigstens eine On-Board-Prozessor muss auch in der Lage sein, Fehlfunktionen des Traktors zu erkennen und in diesem Fall als Notmaßnahme den Traktor stillzusetzen.

Zu diesem Zweck sind die einzelnen Aufgaben teilweise auf einzelne Prozessoren verteilt, wobei einer vorzugsweise als so genannter Watchdog dient, der Abstürze des Hauptprozessors im Traktor erkennen soll und ihn im Zweifel durch Reset in den Ausgangszustand bringt.

Umgekehrt erkennt der Hauptprozessor Fehlfunktionen der ihm untergeordneten Prozessoren anhand von Widersprüchen aus deren Meldungen und ggf. Informationen aus direkt angeschlossenen Sensoren, ausgewerteten Kamerabildern und/oder Informationen vom Zentralrechner.

Ein stillgesetzter oder von selbst komplett liegen gebliebener Traktor wird dann von einem anderen Traktor, dem Rettungstraktor, von der Lagerfläche entfernt, damit er repariert werden kann.

Dies kann durch ankuppeln des Rettungstraktors am havarierten Traktor mittels der normalen Kupplung geschehen, die folglich dann so beschaffen sein muss, dass es keine männlichen und weiblichen oder positiven und negativen Kupplungsteile gibt, oder die Traktoren verfügen über eine spezielle Rettungsöse oder Rettungskupplung, an denen ein Rettungstraktor ankoppeln kann.

Jeder Traktor muss in der Lage sein, hinsichtlich der aufzubringenden Zugkraft auch einen vollbeladenen Anhänger zu ziehen. Sofern das Gewicht des Traktors jedoch höher ist als das Gewicht eines vollbeladenen Anhängers, muss ein Rettungstraktor darüber hinaus in der Lage sein, einen anderen Traktor zu ziehen, auch wenn an diesem ein beladener Anhänger hängt, der mangels Funktion der Kupplung nicht abgekuppelt werden kann.

Vor allem ein solcher Rettungstraktor - gegebenenfalls auch alle Traktoren ― können für Notfälle eine Steckbuchse zum Anstecken eines langen Signalkabels besitzen, um mit Hilfe eines aus der Lagerfläche herausgeführten Kabels eine zuverlässige, funktionierende Kommunikationsstrecke von etwa der Handsteuerung eines Bedieners oder der Zentralsteuerung aus mit einem solchen Rettungstraktor zu schaffen.

Ebenso kann insbesondere ein Rettungstraktor eine Öse zum befestigen eines Rettungsseiles besitzen, mit dessen Hilfe ein Rettungstraktor zusammen mit einem havarierten Traktor, einem angekuppelten verklemmten Anhänger oder aus welchen Gründen auch immer mechanisch mit Hilfe des Zugseiles, und damit mit einer stärkeren Zugkraft als sie ein Traktor aufzubringen in der Lage ist, aus der Lagerfläche herausgezogen werden kann.

Vorzugsweise ist bei dem erfindungsgemäßen Lagerungsverfahren auch das Be- und Entladen der Anhänger automatisiert:
Ob es sich mechanisch bei den Be- und Entladestationen um Roboter mit Greifern oder Saugern, um Klapp- oder Kipplösungen oder andere Lösungen handelt, ist dabei unerheblich, jedoch sei klargestellt, dass eine Zentralsteuerung dann selbstverständlich auch diese Be- und Entladestationen steuern muss, ebenso wie sie einen Aufzug oder ein anderes Verbringungsmittel von einer zur anderen Etage der Lagerfläche ebenfalls mit steuern muss.

Die Lagerfläche selbst besteht aus einer möglichst ebenen Fläche, auf der sich die Traktoren mit den Anhängern möglichst unbeschränkt von Hindernissen wie Stützen und ähnlichem möglichst frei bewegen können sollen.

Ob beim Abstellen vor allem der beladenen Anhänger in Lagerpositionen das Abstellen so erfolgt, dass jeder Anhänger von genügend Verfahrwegen umgeben ist um direkt und sofort angekuppelt und abtransportiert werden zu können, oder ob eine selbstblockierende Lagerpositionierung gewählt wird, bei der davor stehende Anhänger erst entfernt werden müssen, um zu einem dahinter stehenden Anhänger zu gelangen, hängt von verschiedenen Faktoren wie Größe und Anordnung der Lagerfläche, Häufigkeit des Produktumschlages, Größe der Produkte und Anhänger usw. ab und muss im Einzelfall entschieden werden.

In der Regel wird die Lagerfläche nicht in einer Ebene sondern in mehreren Etagen übereinander angeordnet sein, so dass die einzelnen Etagen der Lagerfläche über Stützen und/oder Tragwerke stabil übereinander gebaut werden müssen, was je nach Größe der Lagerfläche in den jeweils darunter liegenden Lagerflächen zwangsweise Stützen in gewissen Abständen erfordert.

In einer bevorzugten Ausführungsform sind die Stützen rasterartig und durch alle Etagen an der gleichen Position durchgehend übereinander angeordnet, wobei die Lagerfläche aus einzelnen rechteckigen Bodenplatten besteht, die rasterartig angeordnet sind, so dass sich unter jedem Eckpunkt, an dem vier solcher Bodenplatten aneinander stoßen, darunter eine Stütze befindet, auf der alle vier Ecken der vier Bodenplatten aufliegen. Gegebenenfalls sind die aneinander stoßenden Kanten der Bodenplatten dabei zusätzlich von einem Tragwerk unterstützt.

Bevorzugt liegen die Bodenplatten dabei auf den Stützen und Fachwerken jedoch nur lose auf oder sind leicht demontierbar befestigt.

Sofern eine Bodenplatte bzw. das nach Entfernen der Bodenplatte entstehende Loch groß genug ist, dass ein menschlicher Bediener hindurch steigen kann, besteht eine Methode des Eindringens eines Bedieners ins Innere eines solchen mehrgeschossigen Lagers darin, dass man z. B. beginnend an der obersten Etage eine Bodenplatte (ggf. noch benachbarte Bodenplatten) abnimmt, von dem entstehenden Loch aus die direkt darunter befindliche Bodenplatte löst, hochkant stellt und in der Diagonalen durch das darüber befindliche Loch nach oben entnimmt und so weiter über mehrere Etagen nach unten, bis der Bediener an der gewünschten Etage angelangt ist, an der er manuell Reparaturen oder andere Tätigkeiten durchführen muss. Das gleiche ist auch von der Unterseite her möglich.

Die Lagerfläche bzw. die einzelnen Bodenplatten besitzen vorzugsweise einen Schichtaufbau, der dem üblichen Fußboden-Laminat entspricht, also
- -: eine die Tragfähigkeit gewährleistende untere Schicht z. B. aus Holz, die selbst wieder aus mehreren Einzelschichten bestehen kann,
- -: auf deren Oberseite eine Bedruckung oder Beschichtung mit einer vor- gegebenen optischen Struktur, die unter anderem auch die Markierun- gen, insbesondere optischen Markierungen, enthält und
- -: darüber eine transparente Schicht aus möglichst abriebfestem Material, insbesondere Kunststoff, auf dem die Anhänger und Traktoren fahren.

Da solche Bodenplatten mit den vorhandenen Maschinen für Laminat-Bodenbeläge sehr kostengünstig erzeugt werden können, kann die gesamte Lagerfläche zu geringen Kosten erstellt werden.

Die Traktoren verfügen des Weiteren über eine eigene Energieversorgung, vorzugsweise einen elektrischen Energiespeicher in Form eines Akkumulators, der an festgelegten Wartepositionen für die Traktoren über eine dort vorhandene Nachladestation automatisch nachgeladen werden kann. Solche Nachladestationen können auch an den Be- und Entladestationen vorhanden sein.

Die - automatischen oder manuellen - Be- und Entladestationen befinden sich vorzugsweise am äußeren Rand der Lagerfläche, bei einer mehrgeschossigen Lagerfläche können sich Be- und Entladepositionen auch an unterschiedlichen Etagen befinden, beispielsweise um bei einem Entladevorgang die Schwerkraft mit auszunutzen, indem eine Entladestation lediglich durch Auskippen eines Anhängers funktioniert und das auf dem Anhänger vorhandene, von dort abgekippte, Produkt z. B. mit Hilfe von schrägen Rutschen auf ein tiefer angeordnetes Förderband rutscht.

Dagegen sollte eine Beladestation in der der Lage sein, das Produkt in einer genau definierten Position auf dem Anhänger abzulegen, was einerseits aus Gründen der leichteren Erkennbarkeit durch die Sensorik nachgeordneter Stationen notwendig ist, andererseits auch aus Gründen der Raumausnutzung auf der Abstellfläche des Anhängers, wenn darauf mehr als ein Produkt abgestellt werden soll.

Hinsichtlich der Kupplung der Traktoren an die Anhänger, aber auch an einen anderen Traktor, gibt es prinzipiell zwei Möglichkeiten:
Die Erste besteht darin, dass es an den beiden zu verbindenden Fahrzeugen nur einen einzigen Verbindungspunkt gibt, und um diesen Verbindungspunkt - der beispielsweise das vordere Ende einer Deichsel sein kann, die sich am Anhänger befindet ― eine Verdrehung der beiden Fahrzeuge um die Hochachse zueinander möglich ist.

Diese Drehbarkeit verringert den Raumbedarf für das Rangieren, erschwert jedoch den Rangiervorgang selbst ganz erheblich.

Die andere Möglichkeit besteht darin, beim Aneinanderkuppeln zweier Einheiten diese drehfest, also als in der Aufsicht betrachtet starre Einheit, zu koppeln, was am einfachsten möglich ist durch in Querrichtung zwei beabstandete Kupplungseinheiten nebeneinander, die beide einrasten. Das Verhalten beim Rangieren, wie etwa beim rückwärts einparken eines Traktors mit Anhänger, ist in diesem Fall leichter zu berechnen und durch eine automatische Steuerung einfacher zu realisieren.

Durch die aus dem Stand in jede Richtung startenden Traktoren ist es dann auch möglich, den Platzbedarf für das Rangieren annähernd so gering zu halten wie bei der ersten Alternative einer drehbaren Kopplung.

Neben den beschriebenen Traktoren zum Ankuppeln der beschriebenen Anhänger kann es im gleichen Lager auch Hub-Traktoren geben, die in der Lage sind, mittels eines Greifers direkt, also ohne Anhänger, auf der Lagerfläche abgelegte Produkte zu ergreifen und während des Transports an dem Hub-Traktor zu halten. Dies ermöglicht die Lagerung von Produkten auf der Lagerfläche ohne Anhänger, was jedoch nur bei Produkten sinnvoll ist, die z.B. im Vergleich zum Gewicht des Traktors relativ leicht sind, insbesondere deutlich leichter als der Traktors selbst.

### c) Ausführungsbeispiele

Ausführungsformen gemäß der Erfindung sind im Folgenden beispielhaft näher beschrieben. Es zeigen:
- Fig. 1a:: eine Lagerfläche in der Aufsicht,
- Fig. 1b:: eine Lagerfläche mit mehreren Etagen übereinander in der Sei- tenansicht,
- Fig. 2:: vergrößerte Ausschnitte aus einer Lagerfläche,
- Fig. 3:: Traktor und Anhänger in der Seitenansicht und in der Aufsicht,
- Fig. 4:: eine Bauform einer Kupplung, und
- Fig. 5:: einen Ausparkvorgang.

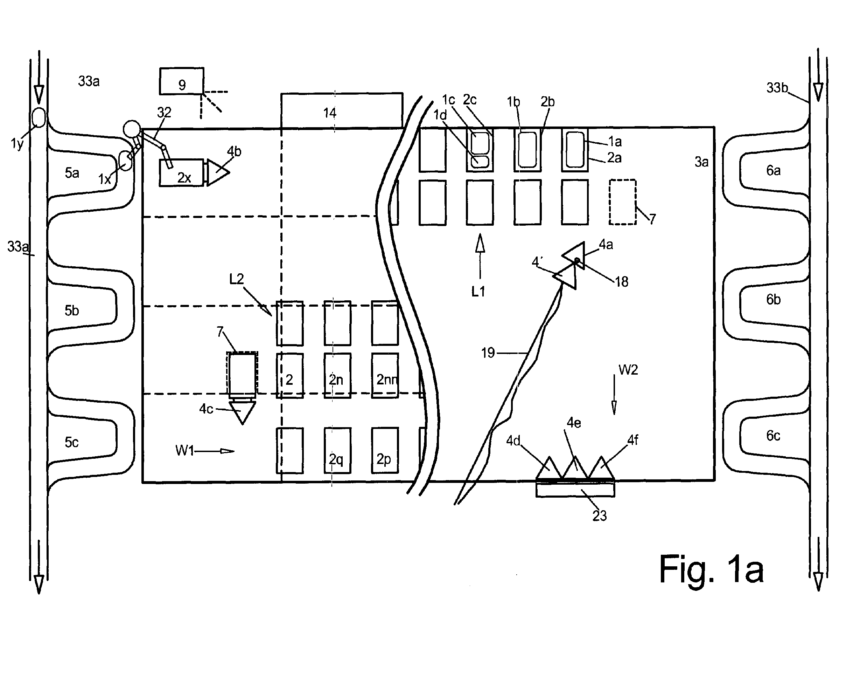

Fig. 1a zeigt in der Aufsicht die in diesem Fall rechteckige Lagerfläche 3a - was jedoch keine Voraussetzung für die vorliegende Erfindung ist - auf der Anhänger 2a,... mit Produkten 1a,... beladen, abgestellt und dadurch gelagert werden sollen, bis sie anderweitig benötigt werden.

Zu diesem Zweck gibt es auf der einen Schmalseite der Lagerfläche 3a eine oder in diesem Fall mehrere Beladestationen 5a, b, c, an denen Produkte 1x, 1y angeliefert und mittels einer dort vorhandenen Umladevorrichtung vorzugsweise automatisch, beispielsweise mit Hilfe eines Roboters 32, auf einen dort bereitgestellten Anhänger 2x geladen werden.

Ebenso gibt es auf der gegenüberliegenden Stirnseite in diesem Fall drei Entladestationen 6a - c, bei denen analog umgekehrt Produkte von einem an der Entladestation bereitgestellten beladenen Anhänger abgenommen werden können.

Das An- und Abliefern der Produkte zu den Be- und Entladestationen 5,6 geschieht in diesem Fall mit Hilfe jeweils eines Förderbandes 33a,b, wobei vorzugsweise an den einzelnen Be-/Entladestationen 5a..., 6a... eine Ausschleusung der Produkte von dem durchgehenden Förderband erfolgt, damit das Produkt 1y zum Umlagern an der Beladestation 5a oder auch der Entladestation 5b stillsteht und von dem Roboter 32 erkannt und ergriffen werden kann, was in der Regel mittels Saugern anstelle von mechanischen Greifern geschieht.

Das Wesentliche der Erfindung besteht darin, dass die Anhänger 2a,... keinen Antrieb besitzen, sondern auf der Lagerfläche 3a,... mit Hilfe von motorisch angetriebenen Traktoren 4a,b,... auf der Lagerfläche 3a,... verfahren oder verschoben werden, im abgestellten Zustand auf der ohnehin im Idealfall genau horizontalen Lagerfläche 3a,..., jedoch selbsthemmend stehen. Von den Traktoren 4a, b,... werden die Anhänger 2a, b,... vorzugsweise jeweils einzeln zwischen einer Beladestation z. B. 5a und einer der Lagerpositionen L1, L2 hin und her bewegt, und ebenso zwischen einer Lagerposition L1, L2 und einer Entladestation 6a,...

Es können auch weitere Bearbeitungspositionen vorhanden sein, an denen die auf den Anhängern 2a befindlichen Produkte 1a,... beispielsweise mit Etiketten versehen, gewogen oder anderweitig bearbeitet werden.

Zu diesem Zweck sollte die Lagerfläche 3a möglichst frei von Hindernissen, also auch frei von Stützen oder Ähnlichem, sein, um die Beweglichkeit der Traktoren 4a,b,... und daran angekoppelten Anhängern 2a,b,... möglichst wenig zu behindern.

Fig. 1a zeigt im linken Bildbereich eine Lagerposition L2, in der die Anhänger 2m, 2n, ... in Zweierreihen abgestellt sind und neben jeder Zweierreihe ein Verfahrweg offen ist, so dass jeder einzelne dieser Anhänger unmittelbar von einem Traktor z. B. 4c angefahren, angekoppelt und aus seiner Lagerposition 7 abtransportiert werden kann.

Im Gegensatz dazu ist die Lagerposition L1 in der rechten Bildhälfte selbstblockierend gestaltet, indem nicht jeder Anhänger 2b, 2c... bzw. jede Lagerposition 7 direkt erreichbar ist, sondern von davor abgestellten anderen Anhängern blockiert wird, die ggf. erst entfernt werden müssten. Ein solcher Lagerungsbereich ist daher nur sinnvoll bei vielen gleichförmigen Produkten 1a,b auf den Anhängern 2a,b, so dass nicht unbedingt ein spezifischer Anhänger beim Auslagern benötigt wird.

In der linken Bildhälfte ist weiter ein Wartebereich W1 für unbeladene Anhänger 2p, 2q... dargestellt, so wie in der rechten Bildhälfte ein Wartebereich W2 für momentan nitch im Einsatz befindliche Traktoren 4d, 4e, 4f, die an dieser Warteposition W2 zusätzlich an einer Ladestation 23 automatisch angekoppelt sind, die während der Wartezeit den Akkumulator 22 in den einzelnen Traktoren 4d,e,... wieder auflädt.

Alle Bewegungen aller bewegten Elemente, also die Verfahrwege und Verfahrzeitpunkte bzw. -Zeiträume der Traktoren 4a,b, die Steuerung der Förderbänder 33a,b und insbesondere deren Ausschleusungen zu den Be- und Entladestationen 5a..., 6a..., die Bewegung der Roboter 32 und auch eines ggf. vorhandenen Aufzuges 14, der die übereinander angeordneten Lagerflächen 3a,b eines mehrgeschossigen Lagers miteinander verbindet, werden von einer Zentralsteuerung 9 gesteuert, wobei die Signalverbindung zu den Traktoren 4a,b,... drahtlos erfolgt, da sich diese unabhängig voneinander und frei auf der Lagerfläche 3a,b bewegen sollen.

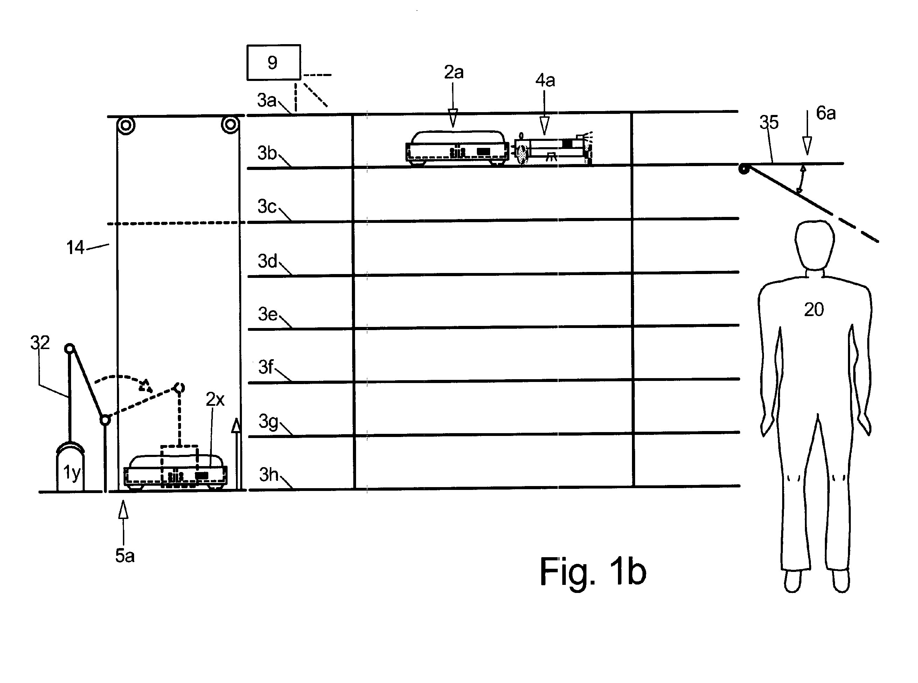

Fig. 1b zeigt in der Seitenansicht ein solches mehrgeschossiges Lager mit übereinander angeordneten Lagerflächen 3a,b,..., aus dem zum einen anhand des daneben dargestellten Bedieners 20 ersichtlich wird, dass der vertikale Abstand der Lagerflächen 3a,b in der Regel zu gering ist, als dass ein Bediener 20 dort hineingelangen könnte.

An der linken Stirnseite des Lagers ist der Aufzug 14 dargestellt, der von der untersten bis zur obersten Lagerfläche 3h - 3a durchgeht und auf jeder Etage halten kann. Wenn sich der Aufzug in seiner tiefsten Position, also auf dem Untergrund, befindet, ist dies gleichzeitig die Beladestation 5a, an der wiederum mittels eines Roboters 32 ein von außerhalb des Lagers angeliefertes Produkt z. B. 1y auf einen im Aufzug stehenden leeren Anhänger z. B. 2x geladen wird. Der beladene Anhänger wird dann mit Hilfe des Aufzuges 14 automatisch auf die von der Zentralsteuerung 9 vorgesehene Etage gebracht, und dort wird der beladene Anhänger durch ein Ankuppeln eines auf dieser Etage heranfahrenden Traktors angekoppelt und aus dem Aufzug 14 heraus in dieser Etage an die von der Zentralsteuerung 9 vorgesehene Lagerposition verbracht.

Auf der rechten Seite der Fig. 1b ist beispielhaft auf einer Etage als Entladestation 6a eine symbolisch dargestellte Kippvorrichtung 35 dargestellt, die in der Lage ist, durch z. B. Kippen einen darauf abgestellten beladenen Anhänger zu entleeren, indem das Produkt vom Anhänger herabfällt auf eine schräge Rutsche oder ein anderes Förderelement, während der Anhänger auf der Kippvorrichtung 35 verbleibt und zurück in seine Lagerfläche verbracht werden kann.

Fig. 1b zeigt auch, dass bei übereinander angeordneten Lagerflächen 3a,b,... sofort das Problem der Unterstützung dieser Lagerflächen entsteht, denn ab einer gewissen Flächenausdehnung der Lagerflächen 3a,b ist lediglich randseitige Unterstützung nicht ausreichend, sondern es müssen dazwischen im Abstand Unterstützungen eingebaut werden, die in der jeweils darunter befindlichen Lagerfläche 3b,... als Hindernisse für die Anhänger und Traktoren wirken.

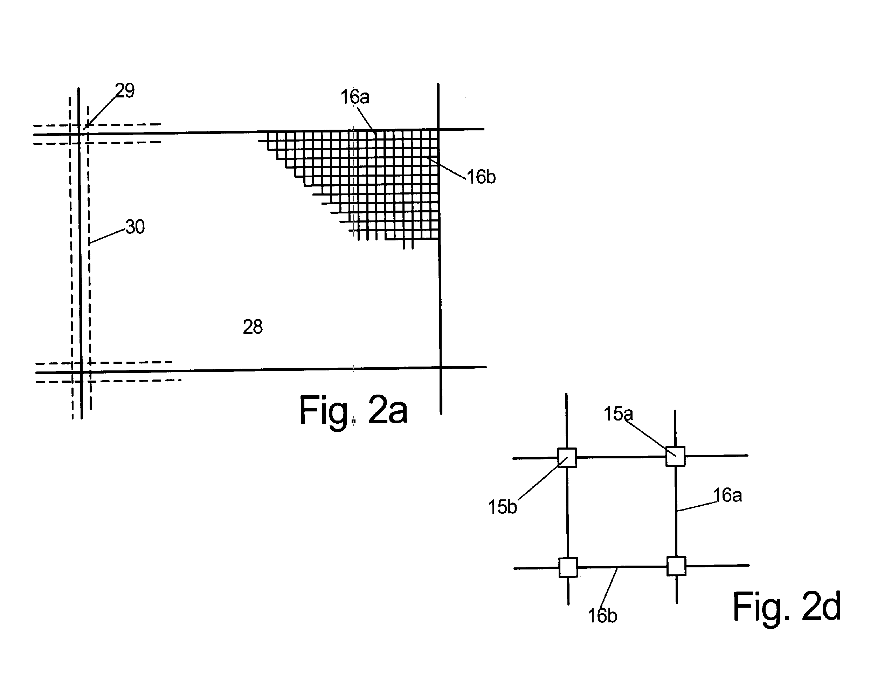

Fig. 2a zeigt in der Aufsicht einen Ausschnitt aus einer Lagerfläche 3a, die beispielsweise aus einer Vielzahl rechteckiger Bodenplatten 28 zusammengesetzt sein kann, die rasterartig angeordnet sind und in den Eckpunkten, an denen jeweils vier Lagerplatten 28 zusammenstoßen, von einer Stütze 29 abgestützt werden können.

Zwischen den Stützen können sich zusätzlich Tragwerke 30 unter den Berührungskanten je zweier Bodenplatten 28 erstrecken. Die einzelnen Bodenplatten 28 sind dabei vorzugsweise so groß bemessen, dass nach Abnehmen von den Stützen 29 und ggf. dem Tragwerk 30 nach oben hierdurch eine Öffnung entsteht, die groß genug ist, dass zum einen ein Bediener 20 zumindest hindurchgreifen, vorzugsweise auch in das mehrstöckige Lager hinein steigen kann.

Dies ist möglich, indem die Stützen 29 in den einzelnen Etagen jeweils übereinander angeordnet sind und nach Herausnehmen der obersten Bodenplatte 28 die darunter liegende Bodenplatte ebenfalls gelöst und durch Hochkantstellen auf der Diagonale der darüber befindlichen Öffnung durch diese hindurch entnommen werden kann.

In der rechten oberen Ecke der Bodenplatte 28 ist weiterhin ein gleichmäßiges System aus längs oder quer verlaufenden Rasterlinien 16a,b zu erkennen, welches eine Möglichkeit ist, wie sich ― in der Praxis bedecken diese optischen Markierungen die gesamte Fläche aller Bodenplatten 28, und somit der gesamten Lagerfläche 3a,b,... - die Traktoren mit Hilfe auf diese Markierungen ansprechender Sensoren den vorgegebenen Weg finden, denn auf der Lagerfläche 3a,b sind die Traktoren 4a,b nicht durch Schienen oder andere formschlüssige oder kraftschlüssige Elemente geführt, sondern frei verfahrbar entsprechend dem von der Zentralsteuerung vorgegebenen Verfahrweg.

Um zu erkennen, in welchem Feld des Rasters man sich befindet, sind vorzugsweise Barcodes 15a,b,... in regelmäßigen Abständen, vorzugsweise in oder an jedem der aus den Rasterlinien 16a,b gebildeten Gefache, vorhanden.

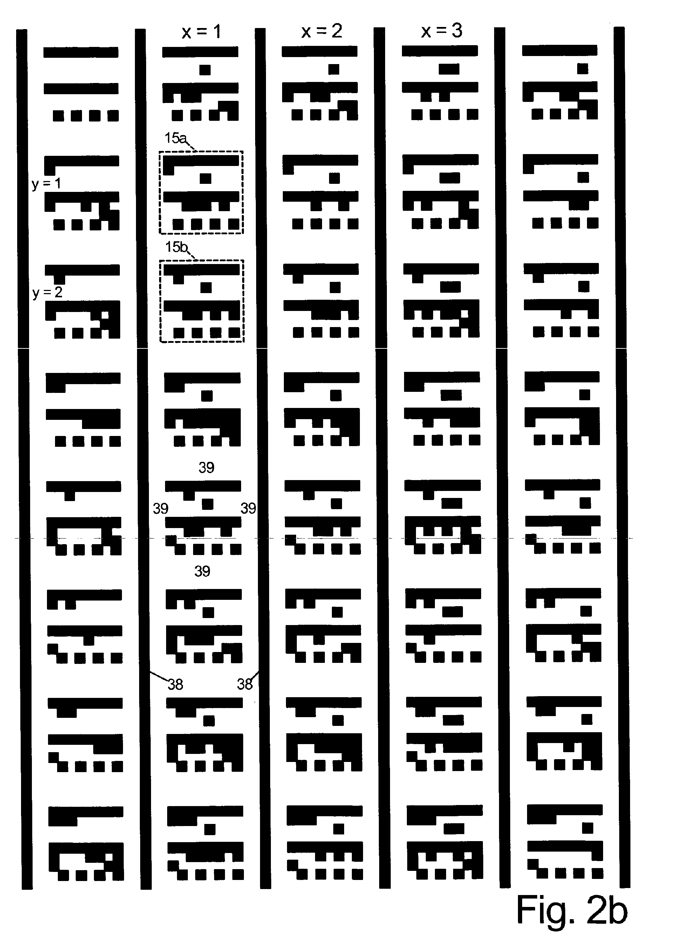

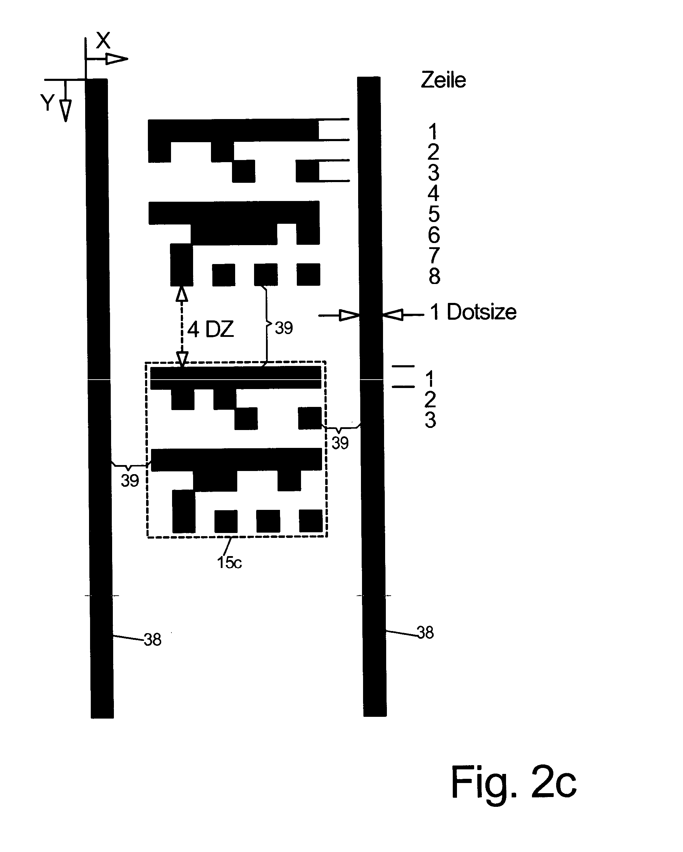

Fig. 2b und in Vergrößerung Fig. 2c zeigt eine Lösung, bei der jedes der Gefache im Wesentlichen vollständig von einem solchen Barcode 15a,b gefüllt ist, so dass an dem Wechsel vom einen zum nächsten Barcode der entsprechende Sensor des darüber fahrenden Traktors 4a,... erkennen kann, wo er sich befindet und in welche Richtung er sich bewegt.

Zu diesem Zweck sind einzelne rechteckige, in diesem Fall quadratische, zweidimensionale Barcodes spaltenweise untereinander angeordnet und durch in Spaltenrichtung dazwischen verlaufende Führungslinien 38 voneinander getrennt.

Jeder Barcode besteht aus einer spezifischen Anordnung von schwarzen und weißen Quadraten, den sogenannten Dots, im vorliegenden Fall acht pro Zeile und acht pro Spalte in jedem Barcode.

Die Führungslinien 38 besitzen eine Breite entsprechend der Breite eines Dots, und die einzelnen Barcodes 15a, b... sind seitlich zu den Führungslinien 38 hin durch einen Leerraum 39 entsprechend der Breite zweier Dots beabstandet und in vertikaler Richtung die Barcodes 15a, b... zueinander durch einen Leerraum 39 von der Breite von vier Dots.

Mit Hilfe der Abfolge von schwarzen und weißen Dots innerhalb eines Barcodes 15a.. wird wie üblich die gewünschte Information verschlüsselt, wobei hier die von oben her gesehen erste, fünfte und achte Zeile jedes Barcodes nicht zur Informationsübermittlung dient, sondern lediglich der Lageerkennung, indem diese Zeilen in allen Barcodes gleich aussehen, nämlich z. B. die erste und fünfte Zeile durchgehend schwarz ist und in der achten Zeile nur die zweiten, vierten, sechsten und achten Dots schwarz sind und die dazwischenliegenden anderen Dots weiß.

Auf diese Art und Weise lässt sich mit den verbleibenden fünf Zeilen á acht bit ein Code mit 40 bit erzeugen, der beispielsweise aufgeteilt wird in reguläre 24 bit für die Verschlüsselung und einen zusätzlichen 16 bit CRC-Code als Sicherheit.

Die Barcodes 15a... sind dabei im Original kleiner als in Figur 2b dargestellt, und die Kamera 27 des Traktors, die die Barcodes abtastet, hat dabei eine solche Aufnahmefläche, dass sie immer wenigsten einen ganzen, vorzugsweise 1,5 bis 2 ganze Barcodes in ihrem Blickfeld hat.

Aufgrund der immer gleichen Gestaltung der Barcodes und der in einer Richtung durchgehenden Führungslinien 38, erkennt die Traktorsteuerung 9' mit Hilfe der Kamera 27 mindestens einen Barcode15a..., und damit anhand der darin verschlüsselten Informationen, an welcher Stelle einer Bodenplatte 28 sie sich befindet.

Zu diesem Zweck sind die einzelnen Bodenplatten 28vorzugsweise identisch bedruckt und dadurch einerseits leicht austauschbar und mit der gleichen Druckvorlage herstellbar, so dass sich auf jeder Bodenplatte 28 der gleiche Barcode 15a... an immer der gleichen Stelle befindet.

Die Information, auf welcher der Bodenplatten 28, also in welchem Bereich innerhalb der Lagerfläche 3a... sich der Traktor befindet, muss dann von einer anderen Informationsquelle stammen, insbesondere durch einfaches Mitzählen der Bodenplatten in Längs- und Bodenrichtung seitens der Traktorsteuerung 9'.

Sobald die Traktorsteuerung 9' den momentan im Blickfeld der Kamera 27 befindlichen Barcode erkannt und hinsichtlich Lage und Informationsgehalt ausgewertet hat, ist der Traktorsteuerung 9' sowohl die Drehlage des Traktors 4a... bezogen auf z. B. die Führungslinien 38 auf weniger als 1° bekannt, als auch die Position, beispielsweise der Abstand der Kamera 27 vom Mittelpunkt des Barcodes 15a..., auf weniger als 1 mm bekannt.

Da sich die einzeln Barcodes 15a... auf einer Bodenplatte 28 in ihrem Informationsgehalt voneinander jeweils unterscheiden, also auf einer Bodenplatte 28 keine zwei identischen Barcodes 15a, b, vorhanden sind, kann ab dem Erkennen eines Barcodes die Traktorsteuerung 9' den Traktor 4a... im Submillimeterbereich genau in die gewünschte Richtung und an die gewünschte Position fahren, indem sie ständig die im Blickfeld der Kamera 27 des Traktors 4a... liegenden Barcodes analysiert und in Abhängigkeit davon seine Fahrtrichtung Fahrtgeschwindigkeit ändert.

Da die Traktorsteuerung 9' nicht nur den zuletzt analysierten Barcode 15a, sondern auch den nächsten vollständig in den Blickbereich der Kamera 27 geratenden Barcode z. B. 15 b vorübergehend in seinem Speicher hält, ist nicht nur die momentane Position, sondern auch die momentane Fahrtrichtung bei Bewegung des Traktors 4a... bekannt.

Fig. 2d zeigt eine andere Lösung, bei der die Kreuzungspunkte der Rasterlinien 16a, b freigelassen sind und in den Kreuzungsbereichen jeweils ein Barcode 15a, b vorhanden ist.

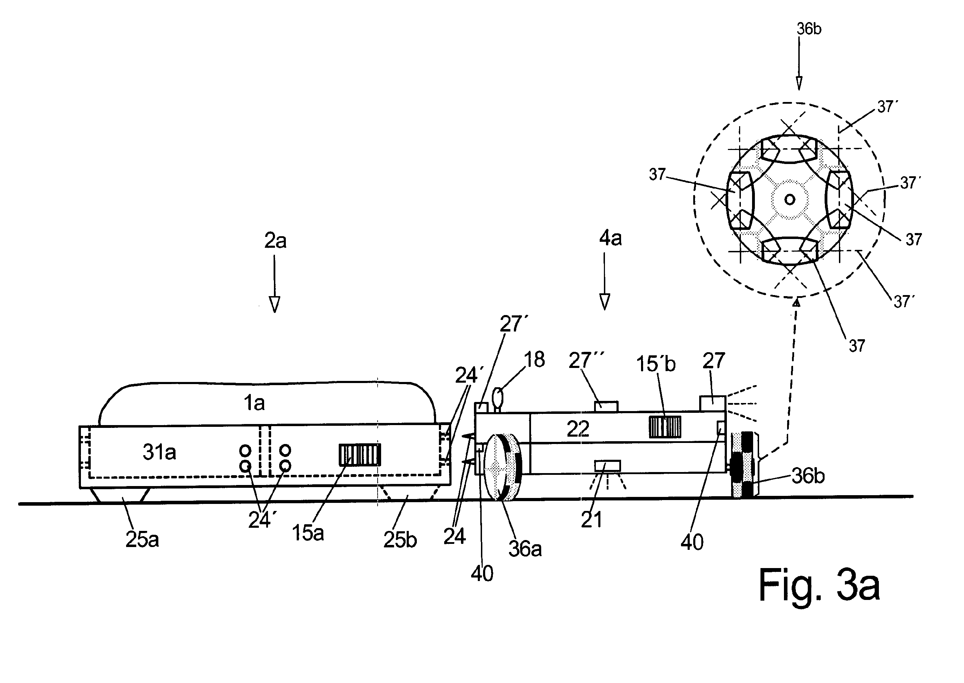

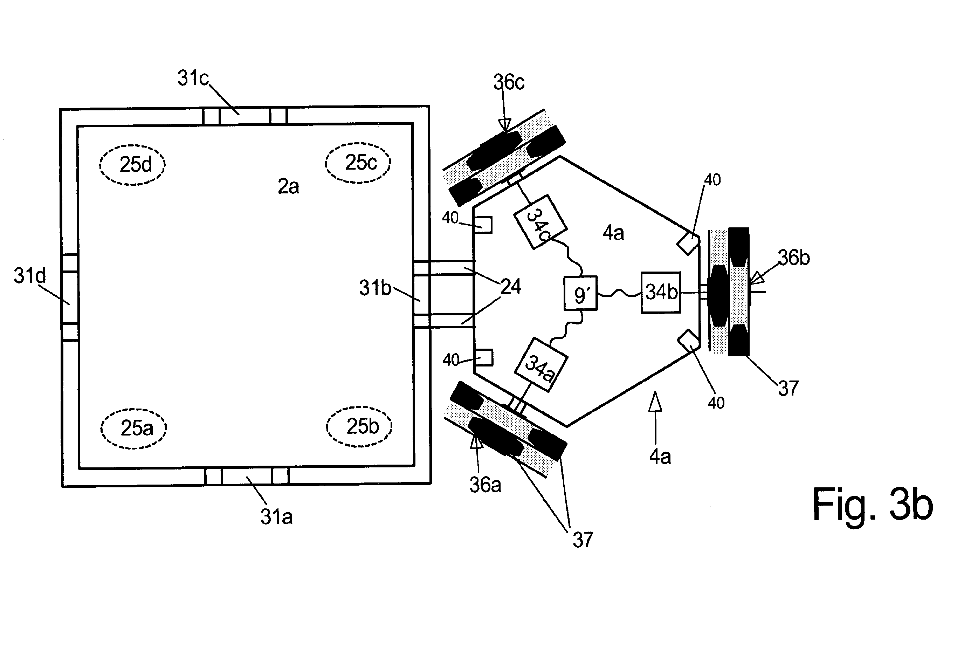

Die Figuren 3a und 3b zeigen in der Seitenansicht und in der Aufsicht jeweils ein Gespann aus Traktor 4a und Anhänger 2a.

In Fig. 3a sind beide voneinander getrennt und der Anhänger 2a beladen mit einem Produkt 1a, in der Aufsicht der Fig. 3b sind die beiden aneinander gekuppelt und damit fest verbunden, aus Übersichtlichkeitsgründen der Anhänger 2a jedoch unbeladen dargestellt.

Wie die Aufsicht der Fig. 3b zeigt, ist der Traktor etwa dreieckig mit drei in einem gleichseitigen Dreieck angeordneten Rädern 36a, b, c, deren Achsen sich im Zentrum des Traktors 4a geometrisch treffen und, die von jeweils einem separaten Motor 34a-c antreibbar sind und von der Steuerung 9', die in jedem Traktor vorhanden ist, hinsichtlich entweder Drehung um die eigene Achse oder Fahren in einer bestimmten Richtung gesteuert werden.

Dies ist möglich, indem in jedem der Räder 36a, b, c in der Lauffläche Querschieberollen 37 so angeordnet sind, dass deren Rotationsachse 37' parallel zur Tangentialrichtung des in Achsrichtung betrachteten Rades 36a... liegt, und die ballige Umfangsfläche dieser Querschieberollen 37 die Kontaktfläche des Rades 36a... gegenüber dem Untergrund bildet.

Die Querschieberollen 37 können dabei in zwei axial beabstandeten Kreisen und auf diesen Rädern 36a... in Umfangsrichtung versetzt zueinander angeordnet sein, um die Traktion zu verbessern.

Ein solcher Traktor 4a ist nicht nur extrem wendig, sondern kann auf der Stelle drehen und aus dem Stand in jede gewünschte Richtung losfahren, ohne überhaupt erst drehen zu müssen.

Dementsprechend hat jeder Traktor 4a,... vorzugsweise nicht nur auf einer, sondern auf allen drei seiner drei Seitenflächen Kupplungselemente 24, und zwar in der Aufsicht betrachtet, vorzugsweise jeweils zwei im Abstand nebeneinander liegende Kupplungselemente 24 in jeder Seitenfläche.

Mit diesen Kupplungselementen 24 kann der Traktor 4a - wie in Fig. 3a am besten zu erkennen - an einen Anhänger 2a,... heranfahren und diesen selbsttätig, also automatisch, ankuppeln und später - wenn sich der Anhänger 2a in der gewünschten Lagerposition befindet ― auch wieder abkuppeln.

Zu diesem Zweck besitzt der Traktor 4a an seiner Kupplungsseite vorzugsweise zwei ebenfalls in Querrichtung beabstandete Abstandssensoren 40, vorzugsweise analoge Abstandssensoren, die vorzugsweise weiter voneinander beabstandet sind als die Kupplungselemente 24, um beim Heranfahren an den Anhänger 2a aufgrund unterschiedlich gemessener Distanzen einen leichten Winkelversatz zwischen Traktor 4a und Anhänger 2a festzustellen und vor dem Ankuppeln durch die entsprechende Ansteuerung der Motoren 34a, b, c, des Traktors 4a ausgleichen können.

Darüber hinaus verfügt der Traktor 4a.. - wie nur in Figur 3a eingezeichnet - zum einen über eine in Vorwärtsrichtung blickende Kamera 27 und/oder darüber hinaus eine in die Gegenrichtung, die Rückwärtsrichtung blickende zweite Kamera 27' und/oder darüber hinaus auch zur Seite hin blickende Seitenkameras 27", und/oder Abstandssensoren in insbesondere alle Richtungen, die beim anschließenden Fahren und vor allem Ein- und Ausparken dazu dienen, auf optischem Wege automatisch zu kontrollieren, dass kein benachbarter z. B. abgestellter Anhänger oder ein anderes Hindernis wie etwa eine Stütze der Lagerfläche berührt wird.

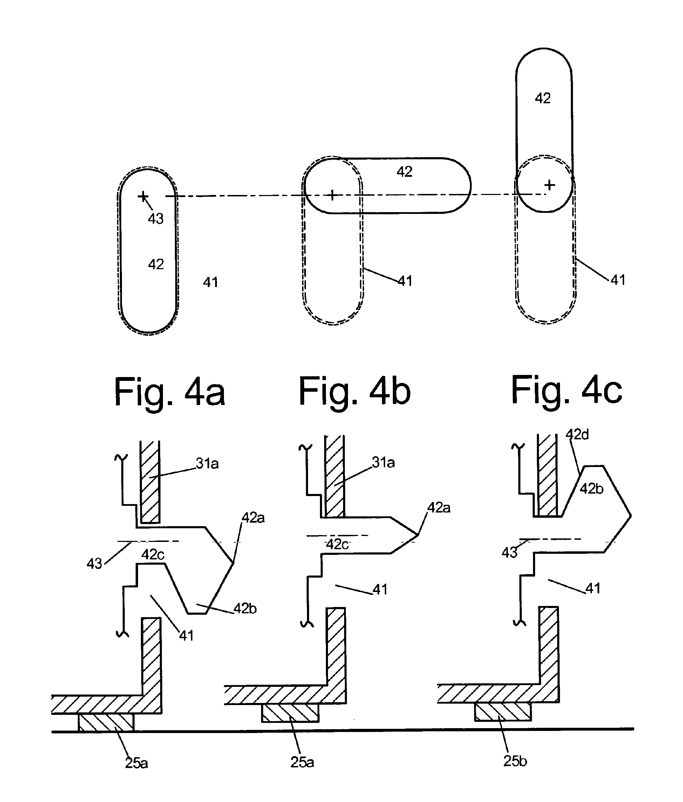

Eine mögliche Bauform einer Kupplung 24 zeigen die Figuren 4:
Auf der Seite des Anhängers 2a ist das Kupplungselement ein Kupplungsloch 41 in Form eines Langloches, welches beispielsweise vertikal angeordnet ist.

Auf der Seite des Traktors 4a ist das Kupplungselement ein Kupplungszapfen 42, der horizontal über die Frontfläche des Anhängers 4a hinaus vorsteht und um eine horizontale Schwenkachse 43 um beispielsweise 180° geschwenkt werden kann.

Der Kupplungszapfen 42 verfügt dabei an seinem freien Ende über eine radial von der Schwenkachse 43 in eine Richtung abstehende Verriegelungsnase 42b.

Wenn diese - in der Ankuppelstellung der Figur 4a - von der Schwenkachse 43 nach unten weist, kann der Kupplungszapfen 42b das Kupplungsloch 41 durchdringen, wobei dann ein leichter Seitenversatz zueinander durch eine an der freien Frontfläche des Kupplungszapfens 42 ausgebildete Zentrierspitze 42a ein Selbstzentrieren erleichtert.

Sobald das Andocken am Anhänger 2a beendet ist, also die Seitenwand 31 a... des Anhängers 2a an dem Längsanschlag 44, der am Traktor 4a um den hinteren Teil des Schaftes des Kupplungszapfens 42 herum ausgebildet ist, anliegt oder weit genug angenähert ist ― was die Abstandssensoren 40 des Traktors 4a messen - wird der Kupplungszapfen 42 um die Schwenkachse 43 geschwenkt.

Da die Schwenkachse 43 exzentrisch im Schaft des Kupplungszapfens 42 angeordnet ist, der dadurch als Hubexcenter 42 wirkt, bewirkt das Verschwenken, dass die Oberseite des Schaftes des Kupplungszapfens 42 ansteigt und die Oberkante des Kupplungsloches 41 nach oben drückt und damit den Anhänger 2a am kupplungsseitigen Ende vom Untergrund abhebt, was bereits der Fall ist, wenn die Verriegelungsnase 42 horizontal abstrebt.

Durch Weiterdrehen der Verriegelungsnase 42b wird durch die vorhandene Schrägfläche 42d auf der Rückseite der Verriegelungsnase 42b die Seitenwand des Anhängers 2a zuverlässig an den Anschlag 44 schwerkraftbedingt herangezogen und dadurch eine Axialverriegelung des Anhängers 2a am Traktor 4a bewirkt.

Da die Lagerfläche 3a eben ist und die Selbsthemmung des Anhängers 2a auf der Lagerfläche ausreicht, sind hierfür keine weiteren Sicherungsmaßnahmen notwendig. Um die ausreichende Selbsthemmung zu erzielen, laufen die Anhänger 2a vorzugsweise nicht mit Hilfe von Rädern auf dem Untergrund, sondern lediglich mit Hilfe von Gleitelementen, hier vier im Viereck unter der Bodenfläche des Anhängers 2a angeordneten Gleitflächen 25a, b, c, d.

Diese können aus reibungsarmem Kunststoff oder auch aus gegenüber der Oberseite der Lagerfläche 3a,... sehr viel weicherem Material, wie etwa Filz oder einem anderen Textilmaterial, bestehen, die gleichzeitig ein Verkratzen der Oberfläche der Lagerfläche 3a durch Staub oder andere Verunreinigungen vermeidet, indem die Lagerflächen von dem z. B. aus Textilmaterial bestehenden Gleitflächen 25a,b,c,d gleichzeitig gereinigt werden.

Auch bei den Anhängern 2a,b - die gemäß der Aufsicht der Fig. 3b vorzugsweise in der Aufsicht quadratisch dimensioniert sind ― befinden sich Kupplungselemente 24' zum Zusammenwirken mit den Kupplungselementen 24 der Traktoren in jeder der Seitenflächen 31 a-d.

Ebenso trägt jeder Anhänger 2a und jeder Traktor 4a mindestens auf einer seiner Seitenflächen, besser auf allen Seitenflächen, einen Barcode 15a', 15b', damit anhand des Barcodes ein Anhänger 2a,... oder Traktor 4a,... auch mit Hilfe einer Kamera 27 oder 27" oder 27' erkannt werden kann, wie sie auf jedem Traktor 4a vorhanden ist und vorzugsweise horizontal geradeaus blickt oder auch schwenkbar angeordnet sein kann, insbesondere zur Verifikation der vom Zentralrechner angegebenen Lagerkoordinaten und zur Nachvermessung ggf. eingetretener leichter Verschiebungen durch eventuell eingetretene Verschiebungen und/oder Kollisionen.

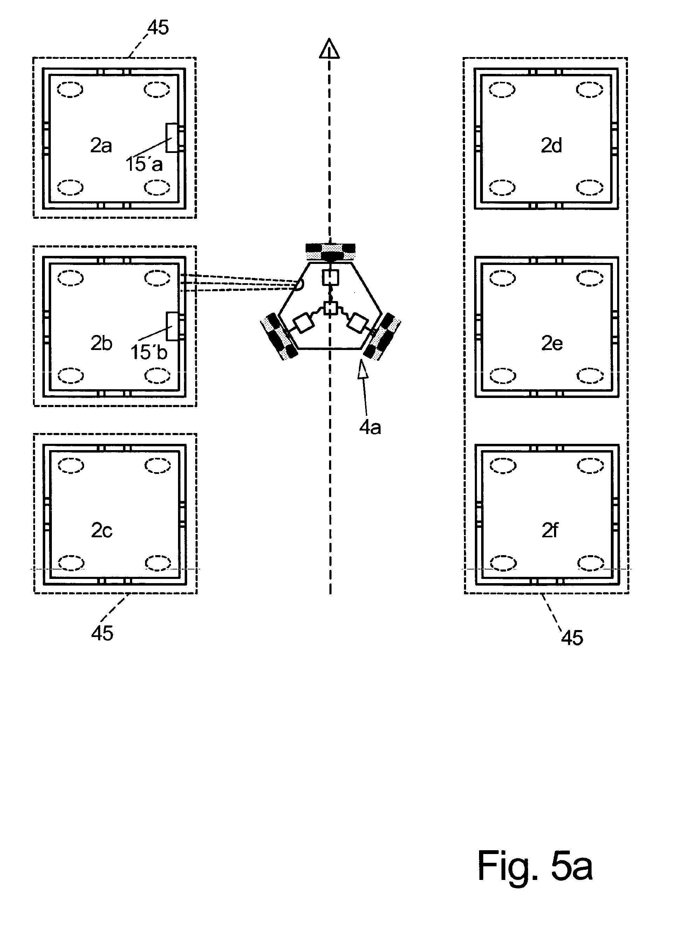

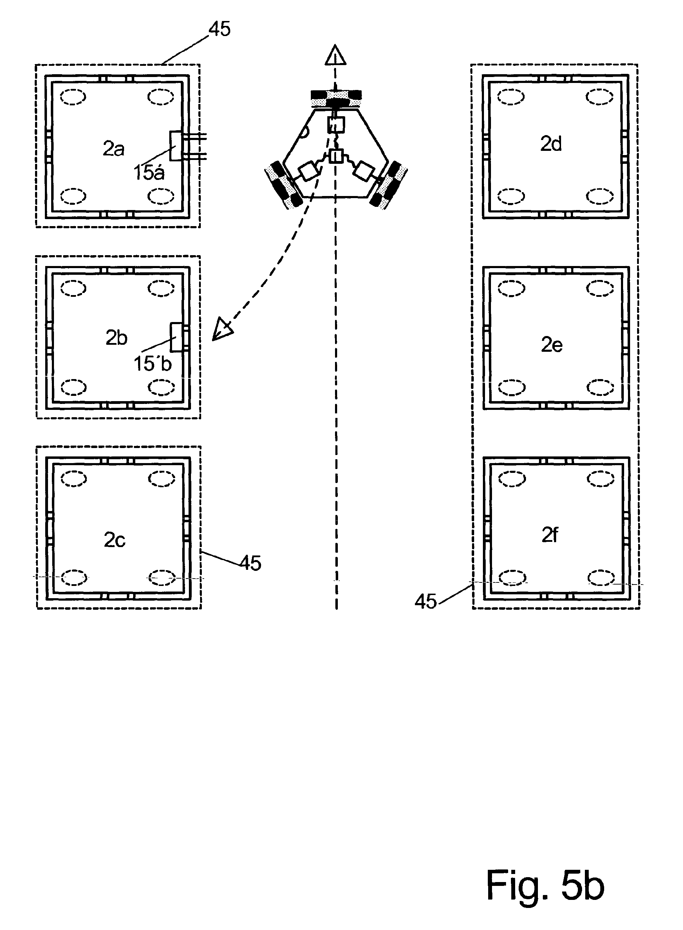

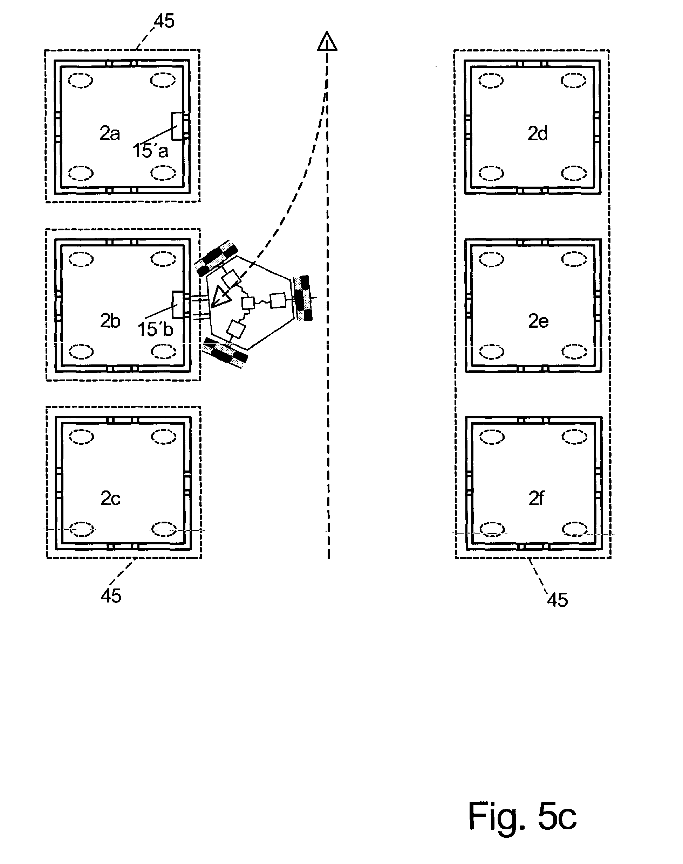

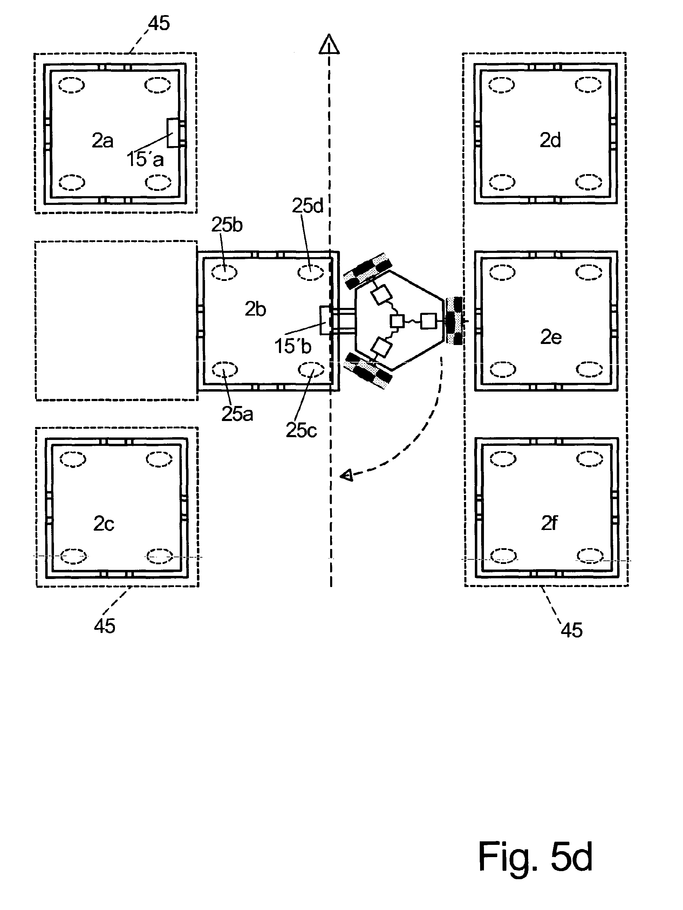

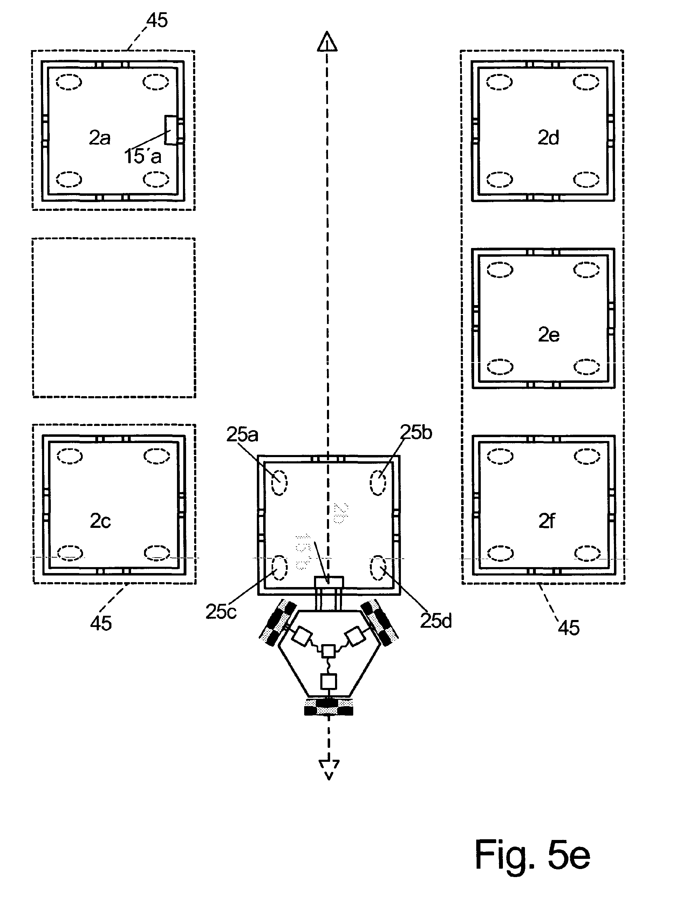

Damit könnte ein Ankuppel- und Auspark-Manöver so ablaufen, wie in den Figuren 5 dargestellt:
Der Traktor 4b, der den abgestellten Anhänger 2b ankuppeln und abholen soll, fährt entlang einer als Verfahrweg 46 dienenden Gasse zwischen zwei Reihen von nebeneinander abgestellten Anhängern 2a bis 2f entlang, in der einer der abzuholende Anhänger 2b ist.

Während der Traktor 4b entlang der als Fahrweg 46 dienenden Gasse zwischen den Reihen von Anhängern 2a... entlang fährt, sucht er mit seiner Seitenkamera 27" nach dem richtigen Anhänger 2b, indem er die auf den Kupplungsseiten der Anhänger angeordneten Barcodes 15'a, 15'b, abtastet, wobei er anhand der Bodenmarkierungen weiß, in welchem Bereich der gesuchte Anhänger 2b stehen müsste.

Sobald er auf diese Art und Weise den richtigen Anhänger 2b erkannt hat, fährt er nur noch soviel entlang des Verfahrweges weiter (Figur 5b), dass er durch anschließendes Rückwärtsfahren und Verschwenken mit seiner Kupplungsseite sich der Kupplungsseite des Anhängers 2b annähert (Figur 5c). Dabei benutzt er die Bodennavigation für die Grobannäherung, und kurz vor Andocken die in seiner Kupplungsseite vorhandenen Näherungssensoren 40, um einen Winkelversatz zwischen Traktor 4b und Anhänger 2b zu erkennen undauszugleichen.

Ferner ermittelt er die genaue Position des Anhängers 2b anhand seiner Rückfahrkamera 27', sofern dies überhaupt notwendig sein sollte, angesichts des möglichen Zentrierbereiches, den die Kupplung 24 oder separate Zentriervorrichtungen bereits bieten.

Nach dem Ankuppeln - wie in den Figuren 4 beschrieben ― fährt der Traktor 4b zusammen mit dem angekuppelten Anhänger 2b zunächst gerade vorwärts aus der Lagerposition 7 des Anhängers 2b heraus (Figur 5d) und vollzieht dann eine etwa bogenförmige Bewegung mit dem Traktor 4d um das hintere Ende des Anhängers 2b herum, bis das gesamte Gespann wieder in Längsrichtung des Verfahrweges 46 steht (Figur 5e).

Hierbei ist jedoch der konkrete Schwenkpunkt des Gespannes bei dieser Bogenfahrt nicht genau bekannt, da er von den Reibungsverhältnissen unter den hinteren Gleitflächen 25a, b des Anhängers 2b abhängt, also beispielsweise der Schwenkpunkt die Mitte der Gleitfläche 25a oder die Mitte der Gleitfläche 25 b oder ein Punkt dazwischen sein kann.

Da jedoch der Traktor 4 b und der Anhänger 2b ein festes Gespann bilden und in ihrer Relativlage zueinander nach dem Ankuppeln genau bekannt sind, genügt die ständige Überprüfung der konkreten Drehlage und Position des Traktors anhand der Bodenmarkierungen, damit die Traktorsteuerung 9' die jeweilige Lage des gesamten Gespannes berechnen und korrigieren kann.

Da die Traktorsteuerung 9' zusammen mit dem Befehl zum Abholen des Anhängers 2b auch die Informationen über die gesamte Lagerungslandschaft im Umfeld des gesamten Verfahrweges übermittelt bekommen hat, also die Position sämtlicher Hindernisse wie etwa der anderen Anhänger 2a, 2c bis 2f einschließlich einer von der Zentralsteuerung 9 um die konkrete Position dieser Hindernisse herum vorsichtshalber einkalkulierter Toleranzzone 45, die ebenfalls von dem Gespann nicht berührt werden darf, sind Kollisionen weitestgehend ausgeschlossen.

Die am Traktor 4a vorhandenen Kameras 27, 27' werden zusätzlich meist nur dann eingesetzt, wenn z. B. laut den Abstandssensoren Kollisionen mit anderen Gegenständen drohen und dann mit Handsteuerung gefahren wird.

Sollte sich dennoch eine drohende oder tatsächliche Kollision mit einem Hindernis ergeben, so wird dessen Position dem Zentralrechner 9 gemeldet, der daraufhin entweder eine Vergrößerung der Toleranzzone 45 dieses Hindernisses durchführt oder die Neuvermessung der Position dieses Hindernisses veranlasst.

In gleicher Weise kann analog umgekehrt das Einparken eines am Traktor 4b angekuppelten Anhängers 2b in eine Parklücke erfolgen.

Wenn dabei beim Hineinschieben des Anhängers 2b das vom Traktor 4b entgegengesetzte Ende des Anhängers 2b aufgrund sich ändernder Reibungsverhältnisse seitlich mehr oder weniger als geplant wegrutscht, und eine Kollision mit einem benachbarten Hindernis droht, veranlasst die Traktorsteuerung 9' ein vorwärts fahren des Gespannes und einen nächsten Einparkversuch, bei dem das zuvor aufgefundene seitliche Versetzen des Anhängers bereits mit eingerechnet wird.

Sollte dennoch ein Einparken auch nicht bei einer vorgegebenen Anzahl von Versuchen erfolgreich sein, bittet die Traktorsteuerung 9' den Zentralrechner 9 um eine alternative neue Parkposition, woraufhin die Zentralsteuerung 9 die nicht realisierbare Parkposition als schwierig vermerkt und gegebenenfalls ganz aus der Liste der zur Auswahl stehenden Lagerpositionen herausnimmt, bis beispielsweise in diesem Bereich die Abstände zwischen den Lagerpositionen vergrößert werden können.

Das Großteil des Gewichts der relativ schweren Traktoren 4a - die ausreichend Traktion auf dem Untergrund aufbringen müssen, um mindestens einen vollgeladenen Anhänger 2a zu ziehen - besteht in dem Gewicht des Akkumulators 22, der an der Ladestation 23 regelmäßig wieder aufgeladen werden kann.

Fig. 3a zeigt ferner die Rettungsöse 18, die an jedem Traktor 4a,... und/oder gegebenenfalls auch an jedem Anhänger vorhanden ist, an der beispielsweise ein spezieller Servicetraktor, der einerseits Reinigungsaufgaben und andererseits auch das Herausbefördern von liegen gebliebenen Traktoren 4a,... aus der Lagerfläche zur Aufgabe hat, angreifen kann, wobei die Rettungsöse wie dargestellt nach oben abragen kann, evtl. auch im Zentrum des Traktors, oder wie die Kupplung in der Seitenfläche angeordnet sein kann.

Dies ist in der rechten Bildhälfte der Fig. 1a dargestellt:
Dort wird der Traktor 4a, der beispielsweise nach dem Einparken und Abkuppeln des oberhalb davon abgestellten Anhängers nicht mehr reagiert hat, aus der Lagerfläche 3a in Richtung unterer Bildkante herausgefahren oder -gezogen mit Hilfe eines Servicetraktors 4' ― der ein normaler Traktor oder ein speziell ausgestatteter Servicetraktor 4' sein kann -, der an der Rettungsöse 18 des havarierten Traktors 4a bereits angekuppelt hat und seinerseits - über den eigenen Antrieb hinaus - über ein nach außerhalb der Lagerfläche 3a führendes Rückzugsseil 19 und mit Hilfe der Sicht über seine wenigstens eine Kamera vom Bediener 20 herausgefahren und/oder -gezogen werden kann, wodurch mehr Zugkraft als durch die Traktion und den Antrieb des Servicetraktors 4' alleine aufgebracht werden kann.

Da der Grund für das Liegenbleiben eines Traktors unter Umständen auch ein Problem der drahtlosen Übermittlung der Signale von der Zentralsteuerung in einen bestimmten Bereich der Lagerfläche sein kann, was dann auch einem drahtlos gesteuerten Servicetraktor 4' widerfahren würde, kann in solchen Fällen dieser kabelgebunden über ein Signalkabel 26, welches vom Servicetraktor 4' nach außerhalb der Lagerfläche 3a führt und mit der kabelgebundenen Dezentralsteuerung 9 oder einer Handsteuerung des Bedieners 20 in Verbindung steht, mit Signalen versorgt werden.

### BEZUGSZEICHENLISTE

- 1a, ...: Produkt
- 2a,b,...: Anhänger
- 3a,...: Lagerfläche
- 4a,...: Traktor
- 4': Servicetraktor
- 5: Beladestation
- 6: Entladestation
- 7: Lagerposition
- 8: Parkposition
- 9: Zentralsteuerung
- 9': Traktorsteuerung
- 12a: Fahrtroute
- 13: Warteposition
- 14: Aufzug
- 15a,b,...: Barcodemarkierung
- 15'a,...: Barcode
- 16a,...: Rasterliniensystem
- 17: Reinigungstraktor
- 17': Reinigungsanhänger
- 18: Rettungsöse
- 19: Rückzugsseil
- 20: Bediener
- 21: Barcodeleser
- 22: Akkumulator
- 23: Ladestation
- 24, 24': Kupplung
- 25a,b: Gleitfläche
- 26: Signalkabel
- 27: Kamera
- 28: Bodenplatte
- 29: Stütze
- 30: Tragwerk
- 31 a,b: Seitenwand
- 32: Roboter
- 33a,b: Förderband
- 34a,b,c: Motor
- 35: Kippvorrichtung
- 36a,b,c: Rad
- 37: Querschieberolle
- 37': Rotationsachse
- 38: Führungslinie
- 39: Leerzone
- 40: Abstandssensor
- 41: Kupplungsloch
- 42: Kupplungszapfen
- 42a: Zentrierspitze
- 42b: Verriegelsungsnase
- 42c: Hubexcenter
- 42d: Schrägfläche
- 43: Schwenkachse
- 44: Längsanschlag
- 45: Toleranzzone
- 46: Verfahrweg
- L1: Lagerposition
- W1: Warteposition

## Patentansprüche

1. Verfahren zum Lagern von Produkten (1a,...), die insbesondere auf Anhängern (2a, b,...) liegen, auf einer wenigstens eingeschossigen Lagerfläche (3a,...) mit Hilfe von insbesondere an den Anhängern (2a, b,...) an- und abkuppelbaren, motorisch angetriebenen Traktoren (4a,...),
**dadurch gekennzeichnet, dass**
je mindestens einer von mehreren Traktoren (4a,...) gleichzeitig
- je mindestens einen Anhänger (2a, b,...) oder ein Produkt (1a...) an- oder abkuppelt, und/oder
- auf der Lagerfläche (3a,...) zwischen Bearbeitungspositionen, insbesondere Belade (5)- und Entladestationen (6), Lagerpositionen (7) für beladene Anhänger (2a, b,...) oder Produkte (1a,...) und Parkpositionen (8) für leere Anhänger auf von einer Zentralsteuerung (9) vorgegebenen Fahrtrouten (12a) hin und her verfährt,
- wobei die Fahrtrouten (12) als auch die Positionen (5-8) an der Lagerfläche (3a,...) nicht formschlüssig festgelegt sind.

2. Verfahren nach Anspruch 1,
**dadurch gekennzeichnet, dass**
zum Einlagern
- ein Traktor (4a,...) mindestens einen leeren Anhänger (2a,b...), der sich in einer Parkposition (8) befindet, anfährt, diesen selbsttätig ankuppelt und
- zu einer Beladestation (5) fährt,
- wo der Anhänger (2a, b,...) mit wenigstens einem Produkt (1a,...) beladen wird,
- anschließend der Traktor (4a,...) den Anhänger (2a, b,...) zu einer Lagerposition (7) verfährt, dort gegebenenfalls den Anhänger (2a, b,...) einparkt,
- den Anhänger (2a, b,...) abkuppelt und abstellt, und
- der Traktor (4a,...) gegebenenfalls in eine Warteposition (13) verfährt,
und
zum Auslagern von Produkten (1a,...)
- der Traktor (4a,...) wenigstens einen in einer z. B. Lagerposition (7) oder Bearbeitungsposition stehenden beladenen Anhänger (2a, b,...) anfährt, selbsttägig ankuppelt und
- zu einer Entladestation (6) verfährt,
- dort das Produkt (1a,...) aus dem Anhänger (2a,b...) entnommen wird,
und
- der z. B. leere Anhänger (2a,b...) vom Traktor (4a,...) zu einer Parkposition (8) verfahren und
- dort abgekoppelt und abgestellt wird, und
- der Traktor (4a,...) gegebenenfalls zu einer Warteposition (13) verfahren wird.

3. Verfahren nach einem der vorhergehenden Ansprüche,
**dadurch gekennzeichnet, dass**
- das Verfahren auch das Verbringen zumindest des Anhängers (2a, b,...), insbesondere zusammen mit dem Traktor (4a,...), in eine andere Etage der Lagerfläche (3a,...), insbesondere mittels eines Aufzuges (14), umfasst, und/oder
- die Traktoren (4a,...) mit der Zentralsteuerung (9) drahtlos, insbesondere mittels WLAN und als Notkanal mittels Funk oder Ultraschall in Verbindung stehen und vom Zentralrechner außer der Start- und Zielposition ihres Verfahrweges auch mindestens Daten über die Lagerungslandschaft erhalten, sowie den einzuschlagenden Fahrtweg sowie den Zeitpunkt und ggf. die Geschwindigkeit der Fahrt.

4. Verfahren nach einem der vorhergehenden Ansprüche,
**dadurch gekennzeichnet, dass**
- die Traktoren (4a,...) lenkbar und aus dem Stand in alle Richtungen verfahrbar sind und insbesondere auf der Stelle drehen können, und/oder
- die Traktoren (4a,...) ihren Fahrtweg exakt mit Hilfe von berührungslos, insbesondere optisch oder elektrisch abgetasteten, Markierungen auf der Lagerfläche (3a,...), insbesondere Barcodemarkierungen (15a, b,...), finden, und/oder
- die Markierungen ein insbesondere rechtwinkliges Rasterliniensystem (16a,...) umfassen, und zusätzlich Markierungen zum Definieren der einzelnen Raster, wie etwa Barcodes (15'a,...), im Inneren des Rasters oder in den Kreuzungsbereichen des Rasters angeordnet sind.

5. Verfahren nach einem der vorhergehenden Ansprüche,
**dadurch gekennzeichnet, dass**
- zum Reinigen der Lagerfläche (3a,...) speziell ausgebildete Reinigungstraktoren (17) eingesetzt werden oder speziell ausgestattete Reinigungsanhänger (17') von einem Traktor über die Lagerfläche bewegt werden, und/oder
- sämtliche Anhänger (2a,b...) und Traktoren (4a,...) über kontaktlos lesbare Kennzeichnungen, insbesondere Barcodes (15'a...) verfügen und entsprechende Sensoren, insbesondere Barcodeleser (21) an allen Bearbeitungsstationen vorhanden sind.

6. Verfahren nach einem der vorhergehenden Ansprüche,
**dadurch gekennzeichnet, dass**
- im Falle des Versagens eines Traktors (4a,...) die traktoreigene Software den Traktor abschaltet und damit stillsetzt und einen Hilferuf an die Zentralsteuerung (9) richtet, und/oder
- im Falle des Versagens eines Traktors (4a,...) und Außer-Kontrolle-Geraten des Traktors dies von der Zentralsteuerung (9) und/oder der Traktorsteuerung (9') aufgrund der Abweichung vom vorgegebenen Traktorverhalten erkannt wird und von der Zentralsteuerung aus der Traktor abgeschaltet und stillgesetzt wird sowie der Teil der Lagerungsfläche (3a,...), in dem der außer Kontrolle geratene Traktor Unordnung angerichtet hat, für das weitere Ein- und Auslagern vorerst von der Zentralsteuerung gesperrt wird:

7. Verfahren nach einem der vorhergehenden Ansprüche,
**dadurch gekennzeichnet, dass**
- zum Entfernen eines defekten Traktors (4a,...) ein zweiter Traktor den defekten Traktor anfährt, ankuppelt und aus dem Lager entfernt, insbesondere durch Verbringen zu einer Entladestation (6), wobei das Entfernen des defekten Traktors insbesondere mittels Handsteuerung des Bedieners (20) und Kamerasicht des zweiten, entfernenden Traktors geschieht und zum Ankuppeln des defekten Traktors insbesondere eine spezielle Rettungöse (18) an den Traktoren verwendet wird, und insbesondere
- an dem Rettungstraktor gegebenenfalls ein Rückzugsseil (19) befestigt ist, dessen anderes Ende außerhalb der Lagerfläche (3a,...) von einem Bediener (20) gehalten wird und zum Zurückziehen des defekten Traktors zusammen mit dem Rettungstraktor dient.

8. Lager für Produkte (1 a,...), mit
- einer ebenen Lagerfläche (3a,...), die körperlich durch möglichst wenige feststehende Hindernisse unterbrochen ist, und
- auf der oder entfernt zu der mehrere Bearbeitungspositionen, insbesondere Beladestationen (5) und Entladestationen (6), vorgegeben sind,
- auf der Anhänger (2a,b,...), auf denen wenigstens je ein Produkt (1a,...) liegt, verfahren und abgestellt werden können,
- motorisch angetriebenen Traktoren (4a,...), die die Anhänger (2a,b...) an- und abkuppeln und auf der Lagerfläche (3a,...) verfahren können,
- einem Navigationssystem, damit die Traktoren (4a,...) einen vorgegebenen Verfahrweg auf der Lagerfläche (3a,...) einnehmen können,
- einer Zentralsteuerung (9), die die mehreren gleichzeitig auf der Lagerfläche (3a,...) fahrenden Traktoren (4a,...) hinsichtlich ihrer Verfahrwege und -zeiten steuert.

9. Lager nach einem der vorhergehenden Vorrichtungsansprüche, **dadurch gekennzeichnet, dass**
- die Lagerfläche (3a,...) sich über mehrere Etagen erstreckt und durch Verbindungsvorrichtungen, insbesondere Aufzüge (14), miteinander verbunden sind, in die Anhänger (2a,b...) alleine oder zusammen mit einem Traktor (4a,...) von einer Etage in die andere verbringbar sind, und/oder
- die Orientierung der Traktoren (4a,...) auf der Lagerfläche (3a,...) durch kontaktlos abzutastende Markierungen auf der Lagerfläche, insbesondere Barcodes (15'a,...), erfolgt, und die Traktoren entsprechende Sensoren, insbesondere mindestens einen Barcodeleser (21), aufweisen, und/oder
- die Markierungen auf der Lagerfläche (3a,...) insbesondere rechtwinklige zueinander verlaufende Rasterlinien (16a,...) oder parallel zueinander verlaufende Führungslinien (38) umfasst und die einzelnen Markierungen, insbesondere Barcodes (15'a,...) im Inneren der Raster oder an den Kreuzungspunkten der Raster oder zwischen den Führungslinien (38) angeordnet sind.

10. Lager nach einem der vorhergehenden Vorrichtungsansprüche, **dadurch gekennzeichnet, dass**
- die Traktoren (4a,...) mit der Zentralsteuerung (9) drahtlos, insbesondere über WLAN, sowie zusätzlich über einen drahtlosen Notkanal, insbesondere mittels Funk oder Ultraschall, in Verbindung stehen, und/oder
- die Bearbeitungsstationen auch Wartepositionen (13) für nicht im Einsatz befindliche Traktoren (4a,...) umfassen, und an den Wartepositionen eine Ladestation (23) für die traktorinternen Energiespeicher, insbesondere elektrische Akkumulatoren (22), vorhanden sind, und/oder
- die Anhänger (2a, b,...) so gestaltet sind, dass sie durch das Ankuppeln wenigstens im Bereich der Kupplung (24) leicht angehoben werden und dadurch ihre Kontaktfläche gegenüber dem Untergrund verringern, und die Anhänger insbesondere nur zwei Räder oder Gleitflächen (25a,b) auf der von der Kupplung abgewandten Seite aufweisen, mit denen sie auf dem Untergrund aufliegen.

11. Lager nach einem der vorhergehenden Vorrichtungsansprüche, **dadurch gekennzeichnet, dass**
- die Anhänger (2a, b,...) als Kupplung (24') in ihrer Seitenwand (31a,b) definiert angeordnete Kupplungselemente, insbesondere Kupplungsöffnungen aufweisen, und die Kupplung (24, 24') in wenigstens zwei einander gegenüberliegenden Stirnflächen des Anhängers (2a,...), insbesondere in allen Seitenflächen des insbesondere rechteckigen Anhängers (2a,...) angeordnet sind, und/oder
- die Kupplung (24) aus zwei oder mehr in Querrichtung beabstandeten Kupplungsteilen besteht, die zu einer drehfesten Verkupplung von Anhänger (2a,...) und Traktor (4a,...) führen.

12. Lager nach einem der vorhergehenden Vorrichtungsansprüche, **dadurch gekennzeichnet, dass**
- der Traktor (4a,...) eine Befestigungsmöglichkeit für ein Notseil aufweist und/oder eine Rettungsöse (18) zum Anhängen eines defekten anderen Traktors und/oder eine Befestigungsmöglichkeit für ein Signalkabel (26), insbesondere ein W-Lan-Kabel, und/oder
- der Traktor (4a,...) wenigstens eine Kamera (27) aufweist und von Rechnersteuerung auf Handsteuerung umgestellt werden kann.

13. Lager nach einem der vorhergehenden Vorrichtungsansprüche, **dadurch gekennzeichnet, dass**
- die Abstände der Etagen der Lagerflächen (3a,...) in Abhängigkeit der einzulagernden Produktgröße sowie Abmessungen der Traktoren (4a,...) und Anhänger (2a,b...) so niedrig wie möglich gewählt wird und insbesondere geringer ist als es für das Hineingelangen eines menschlichen Bedieners (20) ausreichend wäre, und/oder
- bei einer Lagerfläche (3a,...) in mehreren Etagen übereinander die Lagerfläche aus rasterartigen, insbesondere rechteckigen, Bodenplatten (28) zusammengesetzt ist, die auf regelmäßig angeordneten Stützen (29) oder Tragwerken (30) aufliegen und nach oben abgehoben werden können und groß genug sind, dass durch die entstehende Öffnung ein menschlicher Bediener (20) in das Lager hinauf- oder hinabsteigen kann.

14. Lager nach einem der vorhergehenden Vorrichtungsansprüche, **dadurch gekennzeichnet, dass**
- die Anhänger (2a,b...) eine an die Art der Produkte (1a,...) angepasste Gestaltung ihrer Ladefläche bzw. ihres Innenraumes aufweisen und die Anhänger insbesondere von der Bodenfläche aufragende Seitenwände (31a,b) besitzen,
- das Lager motorisch angetriebene Hub-Traktoren umfasst, die in der Lage sind, mit Hilfe einer Greifvorrichtung wenigstens ein Produkt direkt aufzunehmen, insbesondere direkt vom Untergrund aufzunehmen, und während des Verfahrens des Hub-Traktors zu halten.

## Claims

1. A method for storing products (1 a, ...) which are lying in particular on trailers (2a, b ...) on a storage surface (3a, ...) that has at least one level through motor driven tractors (4a, ...) that are in particular connectable and disconnectable at the trailers (2a, b, ...), wherein at least one of plural tractors (4a, ...) simultaneously
- connects or disconnects at least one trailer (2a, b,...) or a product (1a, ...) and/or
- moves back and forth on the storage surface (3a, ...) between processing positions, in particular loading positions (5) and unloading positions (6), storage positions (7) for loaded trailers (2a, b, ...) or products (1a,...) and parking positions (8) for empty trailers on a driving route (12a) predetermined by a central control (9),
- wherein the driving routes (12) and also the positions (5 through 8) at the storage surface (3a, ...) are not defined through form locking.

2. The method according to claim 1, wherein the following steps are performed for storing:
- a tractor (4a, ...) approaches at least one empty trailer (2a, b, ...) which is arranged in a parking position (8) and automatically connects the trailer, and
- moves to a loading station (5)
- where the trailer (2a, b, ...) is loaded with at least one product (1a, ...),
- subsequently the tractor (4a, ...) moves the trailer (2a, b, ...) to a storage position (7), optionally parks the trailer (2a, b, ...) in the storage position,
- disconnects and stores the trailer (2a, b, ...), and
- optionally the trailer moves (4a, ...) into an idle position (13), and
the following steps are performed for retrieving products (1a, ...) from storage,
- the tractor (4a, ...) approaches at least one loaded trailer (2a, b, ...) standing e.g. in a storage position (7) or processing position, automatically connects the trailer and
- moves the trailer to an unloading position (6),
- the product is removed from the trailer (2a, b, ...) in the unloading position, and
- for example the empty trailer (2a, b, ...) is moved by the tractor (4a, ...) to a parking position (8), and
- disconnected in the parking position and stored, and
- the tractor (4a, ...) is optionally moved to an idle position (13).

3. The method according to one of the preceding claims, wherein
- the method also includes moving at least the trailer (2a, b, ...) in particular together with the tractor (4a, ...) into a different level of the storage surface (3a, ...) in particular through an elevator (14), and/or
- wherein the tractors (4a, ...) are connected with the central control (9) wirelessly, in particular through WLAN and as an emergency channel through radio or ultrasound and besides the start and final position of their movement track, also at least data regarding the storage landscape and the drive path to be taken and the point in time and optionally the speed for the trip are obtained from the central computer.

4. The method according to one of the preceding claims, wherein
- the tractors (4a, ...) are steerable and movable from a standstill in all directions and are in particular configured to turn on a spot and/or
- wherein the tractors (4a, ...) find their drive path exactly through markings on the storage surface (3a, ...), in particular barcode markings (15a, b, ...) that are scanned touch-free, in particular in an optical or electrical manner, and/or
- the markings include in particular a rectangular gridline system (16a, ...) and additional markings for defining the particular grids like e.g. barcodes (15'a, ...) are arranged in an interior of the grid or in the intersection portions of the grid.

5. The method according to one of the preceding claims, wherein
- particularly configured cleaning tractors (17) are used for cleaning the storage surface (3a, ...) or especially configured cleaning trailers (17') are moved by a tractor over the storage surface and/or
- all trailers (2a, b, ...) and tractors (4a, ...) include identifiers, in particular barcodes (15'a, ...) that are readable contactless and respective sensors, in particular barcode readers (21) are provided at all processing stations.

6. The method according to one of the preceding claims, wherein
- in case a tractor (4a, ...) fails, the tractor specific software turns off the tractor and thus shuts it down and transmits an emergency message to the central control (9) and/or
- in case a tractor (4a, ...) fails and goes out of control, this is detected by the central control (9) and/or the tractor control (9') due to a deviation from a predetermined tractor behavior and the tractor is switched off and shut down by the central control and the portion of the storage surface (3a, ...) in which the tractor that has gone out of control and has created disorder is blocked in a preliminary manner by the central control from further storing and retrieving.

7. The method according to one of the preceding claims,
- wherein in order to remove a defective tractor (4a, ...), a second tractor approaches the defective tractor, connects it and removes it from the storage, in particular through moving it to an unloading station (6), wherein the removal of the defective tractor is performed in particular through a hand control of the operator (20) and a camera view of the second removing tractor and in particular a special safety eyelet (18) is used at the tractors for connecting the defective tractor, and in particular
- wherein a pullback cable (19) is optionally attached at the rescue tractor, wherein another end of the pullback cable is supported by an operator 820) outside of the storage surface (3a, ...) and used for pulling back the defective tractor together with the rescue tractor.

8. A storage for products (1a,...), comprising
- a flat storage surface (3a,...) which is physically interrupted by as few fixed obstacles as possible, and
- wherein plural processing stations, in particular loading stations (5) and unloading stations (6) are defined on the storage surface or remote from the storage surface,
- wherein trailers (2a, b,...) can be moved and stored on the storage surface on which trailers at least one respective product (1a, ...) is lying,
- motor driven tractors (4a,...) which are configured to connect and disconnect the trailers (2a, b,...) and move them on the storage surface (3a,...),
- a navigation system so that the tractors (4a,...) can take a predetermined movement path on the storage surface (3a,...),
- a central control (9) which controls the plural tractors (4a,...) simultaneously moving on the storage surface (3a,...) with respect to their movement paths and movement times.

9. The storage according to one of the preceding device claims,
- wherein the storage surface (3a, ...) extends over plural levels that are connected with one another through connection devices, in particular lifts (14) in which the trailers (2a, b,...) are movable alone or together with a tractor (4a,...) from one level into another and/or
- an orientation of the tractors (4a, ...) on the storage surface (3a, ...) is provided
through markings on the storage surface that are scanned contactless, in particular barcodes (15'a, ...) and the tractors include respective sensors, in particular at least one barcode reader (21), and/or
- wherein the markings on the storage surface (3a, ...) include in particular gridlines (16a, ...) extending parallel to one another or guidelines (38) extending parallel to one another and the particular markings, in particular barcodes (15'a,...), are arranged in an interior of the grid or at the intersection points of the grids or between the guidelines (38).

10. The storage according to one of the preceding device claims,
- wherein the tractors (4a,...) are connected with the central control (9) wirelessly, in particular through WLAN, and additionally through a wireless emergency channel, in particular through radio or ultrasound, and/or
- wherein the processing stations also include idle positions (13) for tractors (4a,...) that are not being used and a charging station (23) is provided at the idle positions for the internal energy storage devices of the tractors, in particular electrical accumulators, and/or
- the trailers (2a, b,...) are configured so that they are slightly raised through the connecting at least in the portion of the clutch (24) and thus reduce a contact surface relative to ground and the trailers in particular only include two wheels or sliding surfaces (25a, b) on a side oriented away from the clutch, wherein the trailers rest on the ground on the wheels or sliding surfaces.

11. The storage according to one of the preceding device claims,
- wherein the trailers (2a, b,...) include discrete clutch elements, in particular clutch openings arranged in their sidewalls (31a, b) as a clutch (24') and the clutch (24, 24') is arranged in at least two face surfaces of the trailer (2a, ...) that are arranged opposite from one another, in particular in all lateral surfaces of the particularly rectangular trailer (2a, ...), and/or
- wherein the clutch (24) includes two or more clutch components that are offset from one another in transversal direction which lead to a torque proof connection of trailer (2a, ...) and tractor (4a, ...).

12. The storage according to one of the preceding device claims,
- wherein the tractor (4a,...) includes an attachment feature for a rescue cable and/or a rescue eyelet (18) for attaching another defective tractor and/or an attachment feature for a signal cable (26), in particular a WLAN cable, and/or
- wherein the tractor (4a,...) includes at least one camera (27) and can be switched from computer control to manual control.

13. The storage according to one of the preceding device claims,
- wherein the distances of the levels of the storage surfaces (3a, ...) as a function of a size of a product to be stored and dimensions of the tractors (4a, ...) and trailers (2a, b, ...) are selected as small as possible and in particular are smaller than required for a human operator (20) to reach in, and/or
- wherein for a storage surface (3a, ...) that is arranged in plural levels above one another, the storage surface is assembled from grid shaped, in particular rectangular base plates (28) which rest on evenly arranged supports (29) or trusses (30) and can be lifted in upward direction and are large enough so that a human operator (20) can climb up or down into the storage through the opening provided.

14. The storage according to one of the preceding device claims,
- wherein the trailers (2a, b,...) have a configuration of their load surface or interior that is adapted to the type of products (1a,...) and the trailers in particular include sidewalls (31 a, b) protruding in particular from the base surface,
- wherein the storage includes motor-driven lifting tractors which are configured to receive at least one product directly through a gripping device, in particular pick it up directly from the ground and to support it during a movement of the lifting tractor.

## Revendications

1. Procédé pour le stockage de produits (1a,...), qui se trouvent en particulier sur des remorques (2a, b,...), sur au moins une surface de stockage à un niveau (3a,...) à l'aide en particulier de tracteurs (4a,...) motorisés accouplables ou désaccouplables aux remorques (2a, b,...) **caractérisé en ce que** au moins un des plusieurs tracteurs (4a,...) accouple ou désaccouple simultanément
- au moins une remorque (2a, b,...) ou un produit (1a ... ) et/ou
- effectue un mouvement de va-et-vient sur la surface de stockage (3a,...) entre des positions de traitement, en particulier des postes de chargement (5) et de déchargement(6), des positions de stockage (7) pour des remorques chargées (2a, b,...) ou des produits (1a,...) et des positions de garage (8) pour des remorques vides, sur des trajectoires (12a) prescrites par une commande centrale (9)
- les trajectoires (12) et les positions (5-8) n'étant pas définies sur la surface de stockage (3a, ...) par adhérence des formes.

2. Procédé selon la revendication 1, **caractérisé en ce que**
Pour le stockage
- un tracteur (4a,...) accouple au moins une remorque (2a, b,...) de manière autonome laquelle se trouve dans une position de garage (8), et
- l'amène à un poste de chargement (5),
- où la remorque (2a, b,...) est chargée au moins avec un produit (1a,...),
- ensuite le tracteur (4a,...) amène la remorque (2a, b,...) à une position de stockage (7), et y parque le cas échéant la remorque (2a, b,...),
- découple la remorque (2a, b,...) et la dépose, et
- le tracteur (4a,...) se déplace le cas échéant dans une position d'attente (13), et
et pour l'évacuation de produits (1a,...)
- le tracteur (4a,...) amène au moins une remorque (2a, b,...) chargée se trouvant par exemple dans une position de stockage (7) par exemple ou de traitement, l'accouple de manière autonome et
- l'amène à un poste de déchargement (6),
- à cet endroit le produit (1a,...) est retiré de la remorque (2a, b,...) et
- la remorque (2a, b,...) par exemple vide est amenée par le tracteur (4a,...) à une position de garage (8) et
- y est désaccouplée et déposée, et
- le tracteur (4a,...) est éventuellement amené dans une position d'attente (13).

3. Procédé selon l'une des revendications précédentes,
**caractérisé en ce que**
- le déplacement comprend également le séjour au moins de la remorque (2a, b,...), en particulier ensemble avec le tracteur (4a,...) à un autre étage de la surface de stockage (3a,...), en particulier au moyen d'un ascenseur (14), et/ou
- les tracteurs (4a,...) sont reliés à la commande centrale (9) sans fil, en particulier par réseau WLAN ou en tant que canal de secours par radio ou ultra-sons et reçoivent de l'ordinateur central outre la position de départ et la position cible de leur trajet également au moins des données sur le paysage de stockage, ainsi que le trajet à suivre et le moment et éventuellement la vitesse.

4. Procédé selon l'une des revendications précédentes,
**caractérisé en ce que**
- les tracteurs (4a,...) sont pilotables et déplaçables dans toutes les directions et en particulier peuvent tourner sur place, et/ou
- les tracteurs (4a,...) trouvent leur trajectoire exacte à l'aide de marquages balayés sans contact en particulier optiquement ou électriquement sur la surface de stockage (3a,...), en particulier des marquages de code-barres (15a, b,...), et/ou
- les marquages comprennent un système de trame en particulier rectangulaires (16a,...) et en supplément des marquages pour la définition de chacune des trames telles que des codes-barres (15'a,...) sont disposées à l'intérieur de la trame ou dans les zones d'intersection de la trame.

5. Procédé selon l'une des revendications précédentes,
**caractérisé en ce que**
- pour le nettoyage de la surface de stockage (3a,...), on utilise des tracteurs de nettoyage (17) spécialement conçus ou des remorques (17') munies d'un équipement spécial qui sont déplacés par un tracteur sur la surface de stockage, et/ou
- toutes les remorques (2a, b,...) et tracteurs (4a,...) disposent de marquages lisibles sans contact, en particulier des codes-barres (15'a...) et des capteurs correspondants, en particulier des lecteur de code-barres (21) sont prévus sur tous les postes de traitement.

6. Procédé selon l'une des revendications précédentes,
**caractérisé en ce que**
- dans le cas d'une défaillance d'un tracteur (4a,...), le logiciel propre au tracteur déconnecte le tracteur et ainsi l'immobilise et envoie un appel de secours à la commande centrale (9), et/ou
- en cas de défaillance d'un tracteur (4a,...) et la perte de contrôle du tracteur, ceci est détecté par la commande centrale (9) et/ou la commande de tracteur (9') sur la base d'une divergence d'un comportement de tracteur prescrit et le tracteur est déconnecté et immobilisé par la commande centrale, ainsi que la partie de la surface de stockage (3a,...), dans laquelle le tracteur hors de contrôle a provoqué un désordre, est bloquée en premier lieu par la commande centrale pour la poursuite du stockage et déstockage.

7. Procédé selon l'une des revendications précédentes,
**caractérisé en ce que**
- pour l'éloignement d'un tracteur (4a,...) défectueux, un second tracteur approche le tracteur défectueux, l'accouple et l'éloigne de l'entrepôt, en particulier en l'amenant à un poste de déchargement (6), le retrait du tracteur défectueux s'effectuant en particulier par une commande manuelle de l'opérateur (20) et du point de vue de la caméra du second tracteur éliminateur, et pour l'accouplement du tracteur défectueux, on utilise en particulier un anneau de sauvetage spécial (18) sur les tracteurs, et en particulier
- sur le tracteur de sauvetage, il est fixé le cas échéant un câble de retrait (19) dont l'autre extrémité est maintenue à l'extérieur de la surface de stockage (3a,...) par un opérateur (20), et sert au retrait du tracteur défectueux ensemble avec le traceur de sauvetage.

8. Entrepôt pour produits (1a,...) comprenant
- une surface de stockage plane (3a,...) qui est interrompue corporellement par quelques obstacles fixes dans la mesure du possible, et
- surface sur laquelle ou éloignée de cette dernière, plusieurs positions de traitement, en particulier des postes de chargement (5) et des postes de déchargement (6) sont prescrits,
- sur laquelle des remorques (2a, b,...), sur lesquelles se trouve au moins un produit (1a,...), peuvent être déplacées et déposées,
- des tracteurs (4a,...) motorisés qui peuvent accoupler et désaccoupler les remorques (2a, b,...) et les déplacer sur la surface de stockage (3a,...),
- un système de navigation, afin que les tracteurs (4a,...) puissent prendre une trajectoire prescrite sur la surface de stockage (3a,...),
- une commande centrale (9), qui commande les plusieurs tracteurs (4a,...) circulant simultanément sur la surface de stockage (3a,...) par rapport à leur trajectoire et durée de trajectoire.

9. Entrepôt selon l'une des revendications de dispositifs précédentes, **caractérisé en ce que**
- la surface de stockage (3a,...) s'étend sur plusieurs étages qui sont reliés entre eux par des dispositifs de liaison, en particulier des ascenseurs (14), dans lesquels des remorques (2a, b,...) seuls ou ensemble avec un tracteur (4a,...) peuvent être amenées d'un étage à l'autre, et/ou
- l'orientation des tracteurs (4a,...) sur la surface de stockage (3a,...) s'effectue par des marquages scannés sans contact sur la surface de stockage, en particulier des codes-barres (15'a,...) et les tracteurs présentent des capteurs correspondants, en particulier un lecteur de codes-barres (21), et/ou
- les marquages comprennent sur la surface de stockage (3a,...) en particulier des lignes de trame (16a,...) s'étendant en angle droit les unes par rapport aux autres ou des lignes de guidage (38) parallèles entre elles et les marquages individuels, en particulier les codes-barres (15'a,...) sont disposés à l'intérieur de la trame ou aux points d'intersection de la trame ou entre les lignes de guidage (38).

10. Entrepôt selon l'une des revendications de dispositifs précédentes, **caractérisé en ce que**
- les tracteurs (4a,...) sont reliés à la commande centrale (9) sans fil, en particulier par réseau WLAN ou en tant que canal de secours par radio ou ultra-sons, et/ou
- les postes de traitement comprennent également des positions d'attente (13) pour des tracteurs (4a,...) immobilisés, et aux positions d'attente, il est prévu une poste de chargement (23) pour l'accumulateur d'énergie interne au tracteur, en particulier des accumulateurs électriques (22), et/ou
- les remorques (2a, b,...) sont configurées de sorte qu'elles sont légèrement soulevées par l'accouplement au moins dans la zone de l'accouplement (24) et diminuent ainsi leur surface de contact par rapport à la base, et les remorques n'appliquent en particulier que deux roues ou des surfaces de glissement (25a, b) sur la face détournée de accouplement, surfaces avec lesquelles elles reposent sur la base.

11. Entrepôt selon l'une des revendications de dispositifs précédentes, **caractérisé en ce que**
- les remorques (2a, b,...) présentent en tant qu'accouplement (24') des éléments d'accouplement disposés de manière définie dans leur paroi latérale (31 a, b), en particulier des ouvertures d'accouplement, et l'accouplement (24, 24') sont disposées dans au moins deux surfaces frontales mutuellement opposées de la remorque (2a,...), en particulier dans toutes les surfaces latérales de la remorque (2a,...) en particulier rectangulaire, et/ou
- l'accouplement (24) se compose de deux ou plusieurs parties d'accouplement à distance dans la direction transversale, qui mènent à un accouplement fixe en rotation de remorques (2a,...) et de tracteurs (4a,...).

12. Entrepôt selon l'une des revendications de dispositifs précédentes, **caractérisé en ce que**
- le tracteur (4a,...) présente une possibilité de fixation pour un câble de secours et/ou un anneau de sauvetage (18) pour accrocher un autre tracteur défectueux et/ou une possibilité de fixation pour un câble de signal (26) en particulier un câble de réseau W-Lan, et/ou
- le tracteur (4a,...) présente au moins une caméra (27) et peut être transféré de la commande d'ordinateur à la commande manuelle.

13. Entrepôt selon l'une des revendications de dispositifs précédentes, **caractérisé en ce que**
- les distances de étages des surfaces de stockage (3a,...) sont sélectionnées aussi réduites que possible en fonction de la taille des produits à stocker ainsi que des dimensions des tracteurs (4a,...) et des remorques (2a, b,...) et en particulier sont inférieures à ce qui serait suffisant pour l'accès d'un opérateur humain (20), et/ou
- dans le cas d'une surface de stockage (3a,...) dans plusieurs étages superposés, la surface de stockage est composée de plaques de sols (28) en forme de trame, en particulier rectangulaires, qui reposent sur des supports (29) disposés régulièrement ou des charpentes (30) et peuvent être soulevées vers le haut et sont de dimensions suffisantes pour permettre le passage par l'ouverture en résultant d'un opérateur humain (20) vers le haut ou vers le bas.

14. Entrepôt selon l'une des revendications de dispositifs précédentes, **caractérisé en ce que**
- les remorques (2a, b,...) possèdent une configuration adaptée à la nature des produits (1a, ... ), de sa surface de chargement, respectivement de son espace intérieur et les remorques possèdent des parois latérales (31 a, b) en particulier verticales depuis la surface de sol,
- l'entrepôt comprenant des tracteurs de levage motorisés, qui sont en mesure de recevoir au moins directement un produit à l'aide d'un dispositif de préhension, en particulier directement de la base et de le maintenir pendant le déplacement du tracteur de levage.
